# EUROPÄISCHE PATENTSCHRIFT

(11) **EP 0 714 244 B1**
(45) Veröffentlichungstag und Bekanntmachung des Hinweises auf die Patenterteilung: **02.02.2000**
(21) Anmeldenummer: 95924239.7
(22) Anmeldetag: 14.06.1995
(51) Int. Cl.: A42B 3/32, A42B 3/00, A42B 3/04, A42C 2/00, B29C 44/14, B29C 33/18

(54) **SCHUTZHELM UND VERFAHREN ZUR HERSTELLUNG**
PROTECTIVE HELMET AND METHOD OF MANUFACTURING SAME
CASQUE DE PROTECTION ET SON PROCEDE DE FABRICATION

(30) Priorität: 16.06.1994 DE 4421110
(43) Veröffentlichungstag der Anmeldung: 05.06.1996
(73) Patentinhaber: Braem, Franz, 46509 Xanten (DE)
(72) Erfinder: Braem, Franz, 46509 Xanten (DE)
(74) Vertreter: Brehm, Hans-Peter, Dr. Dipl.-Chem.
(86) Internationale Anmeldenummer: EP9502313
(87) Internationale Veröffentlichungsnummer: WO9534229

(56) Entgegenhaltungen:
- EP-A- 0 183 588
- EP-A- 0 391 389
- WO-A-86/03950
- WO-A-93/08711
- DE-A- 2 245 997
- DE-U- 8 316 386
- DE-U- 8 709 981
- DE-U- 9 409 767
- US-A- 3 087 166
- US-A- 3 579 637
- US-A- 4 044 399
- PATENT ABSTRACTS OF JAPAN vol. 17 no. 499 (C-1109) ,9.September 1993 & JP,A,05 132809 (OOBEKUSU KK)

## Beschreibung

Die Erfindung betrifft einen Schutzhelm nach dem Oberbegriff des Anspruches 1 sowie ein Verfahren zu dessen Herstellung.

Das Dokument DE-U-83 16 386 offenbart einen Schutzhelm, insbesondere Integralschutzhelm für Motorradfahrer, dessen Helm aus zwei Formschalen gebildet ist, die in der Längsachse des Helmes gesehen formschlüssig aber lösbar miteinander verbunden sind.

Weitere Integralschutzhelme mit mehrteiliger Helmschale sind in den Dokumenten DE-B-27 20 785, DE-B-28 17 528, DE-A-29 01 088, DE-A-29 12 948, DE-A-29 16 297, DE-A-30 25 770, DE-A-31 36 723, DE-A-32 17 119, DE-A-37 27 701 und EP-A-0 074 658 beschrieben.

Das Dokument WO 86/03950 betrifft einen Schutzhelm, der insbesondere bei sportlichen Aktivitäten verwendet werden soll und der im wesentlichen aus einer relativ dicken Kappe aus Weichschaummaterial, beispielsweise Polyurethan besteht, die mit einer äußeren Abdeckung versehen ist. Für Skifahrer kann diese Abdeckung aus einer Haut aus weichem Kunststoffmaterial bestehen; andererseits kann diese Abdeckung auch aus einem starren schlagfesten Material bestehen. Die weiche Haut kann aus einer Schicht aus luftdichtem Kunststoffmaterial bestehen, wie etwa aus Plastisol, das sich von dem Schaummaterial unterscheidet und das an diesem haftet. Nach einer alternativen Ausführungsform kann die luftdichte Haut aus einer dichteren äußeren Schicht bestehen, die einstückig (integral) mit dem Schaummaterial der Kappe ausgebildet ist.

Das Dokument DE-A-22 45 997 offenbart ein Verfahren zur Herstellung von Sturzhelmen oder ähnlichen Kopfbedeckungen, wobei die Außenschale in einem Werkzeug nach dem als bekannt vorausgesetzten Reaktionsgießverfahren hergestellt wird, aus einem schaumbildenden Kunststoff (Integralschaumstoff), der beim Ausschäumen in situ eine Haut bildet. Das wesentlich Neue wird in der Anwendung von Leichtstoffen mit integrierter Haut gesehen. Es wird die Möglichkeit der Vorlackierung oder einer ähnlichen Oberflächenbearbeitung der Außen- oder Innenschale angesprochen, wobei bereits vor dem Eingießen der Reaktionsgemische eine Farb- und/oder Dekorschicht auf der inneren Fläche der Form und/oder des Stempels aufgebracht wird.

Das Dokument JP-A-51 32 809 offenbart einen für Sportanwendungen geeigneten Schutzhelm mit geringem Gewicht und ausgezeichneter Schlagfestigkeit. Die Herstellung der Helmschale erfolgt in einer mehrteiligen Form, in deren Formhohlraum flüssiges, Polyurethanschaum bildendes Material eingebracht wird, das nach dem "insert-cast-molding-Verfahren" eine Helmschale bildet, die an ihrer Außenfläche eine Polyurethanhaut und an ihrer Innenfläche eine Schicht aus Polyurethanschaum aufweist. In den so gebildeten Kunststoffkern ist wenigstens ein Befestigungsmittel zur Anbringung eines Kinnriemens oder sonstigen Zubehörteiles eingebettet.

Das Dokument US-A-3 087 116 offenbart einen Helm für Hockeyspieler, der im wesentlichen aus einem Vorderkopfteil und einem Hinterkopfteil besteht, die beide über Bänder miteinander verbunden sind. Jedes Kopfteil weist einen mehrschichtigen Aufbau auf, mit einer widerstandsfähigen, formbewahrenden Außenschicht und einer weichen, polsterartigen Innenverkleidung. Die Außenschicht kann aus natürlichem Leder oder aus Kunstleder bestehen. Die Verbindung zwischen der Außenschicht und der Innenverkleidung erfolgt über kräftige Nähte.

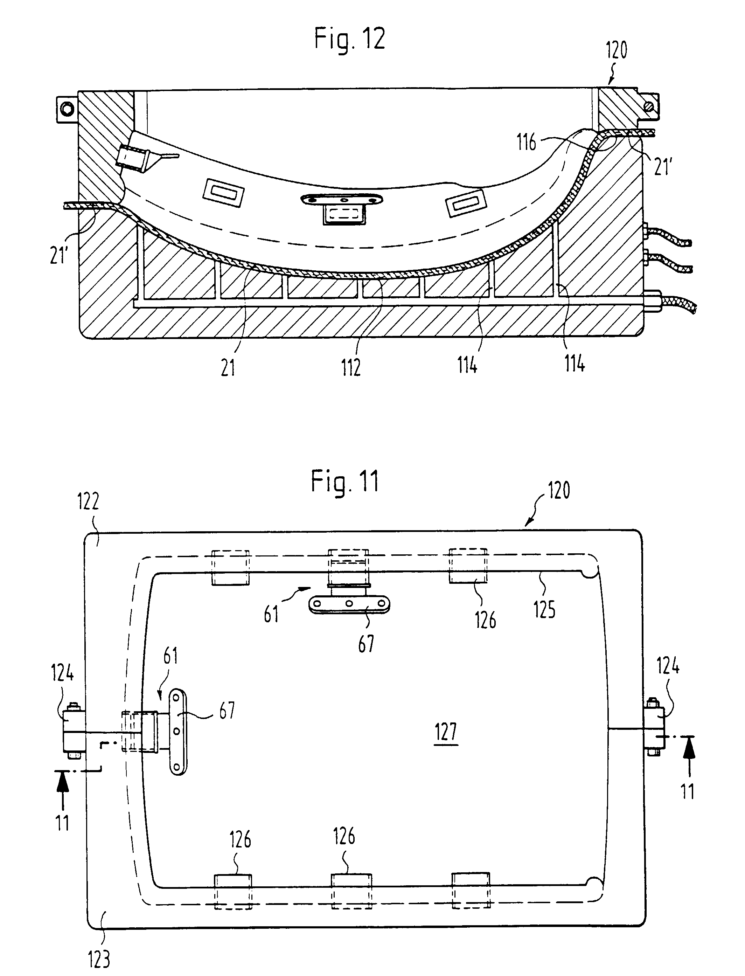

Das Dokument US-A-4 044 399 offenbart einen Schutzhelm, dessen Innenauskleidung individuell an den Kopf des Trägers angepaßt ist. Hierzu ist ein Kopfstück, etwa in Art einer Badehaube, vorgesehen, das über den Kopf des Trägers gestülpt wird. Im Abstand zu diesem Kopfstück wird eine kuppelförmige harte Außenschale angeordnet. Die Randabschnitte zwischen Kopfstück und Außenschale werden gegeneinander abgedichtet. Anschließend wird in den Zwischenraum zwischen Kopfstück und Außenschale eine flüssige Mischung eingebracht, die unmittelbar benachbart zum Kopf des Trägers einen Polyurethanschaum bildet. Entsprechend der Ausführungsform nach den Figuren 12 bis 16 ist das Kopfstück aus einem Stück natürlichem Leder gebildet worden, das ungefähr in die kuppelförmige und an den Kopf des beabsichtigten Trägers angepaßte Gestalt einer Helm-Innenauskleidung gebracht worden ist. In diesem Falle erfolgt die Bildung und Ausschäumung des Polyurethanschaums in situ in Kontakt mit einer Schicht aus natürlichem Leder unmittelbar benachbart zum Kopf des späteren Helmbenutzers. Da das Kopfstück aus Leder unmittelbar am Kopf des späteren Helmbenutzers abgestützt ist, kann bei der Ausschäumung ein nennenswerter Schäumdruck, der das Leder verformen würde, nicht auftreten. Ferner bildet der so erzeugte Polyurethanschaum die Auskleidung des Schutzhelms, jedoch nicht dessen Helmschale.

Das Dokument DE-C-41 34 951 betrifft ein Verfahren zum Beziehen von Kfz-Innenausbauteilen, insbesondere von Instrumententafeln, mit einem nur gering dehnfähigen Dekormaterial wie Leder, wobei die Innenausbauteile Bereiche mit räumlich stärker gekrümmten Oberflächen und andere Bereiche mit räumlich geringer gekrümmter Oberfläche aufweisen. Ausgehend von der Erfahrung, daß bei komplizierten, das heißt bei stark konturierten Bauteilen, wie zum Beispiel Instrumententafeln die Technik des direkt Hinterschäumens nicht oder nur äußerst schwer beherrschbar ist, weil dazu ein lappiges, konturgetreu genähtes Lederkleid sehr exakt und faltenfrei in das Schäumwerkzeug eingelegt und fixiert werden müßte, was meist nicht gelingt, wird in zwei Schritten vorgegangen.

In einem ersten Schritt erfolgt das Aufkleben des Lederkleides in dem wenig räumlich gekrümmten Bereich der Oberfläche des Trägerteiles durch Hinterschäumen mittels eines klebewirksamen Schaumes innerhalb des Schäumwerkzeuges. Hierzu wird das Lederkleid in das Schäumwerkzeug lagedefiniert eingelegt und durch Vakuum darin gehaltert und dabei - innerhalb der beschränkten Dehnfähigkeit - in die erwünschte Oberflächenform gespannt. Anschließend wird das in dem geringer gekrümmten Oberflächenbereich mit einer der Klebeschaumstärke entsprechenden Materialrücknahme versehene Trägerteil in das Schäumwerkzeug lagedefiniert eingelegt; das Schäumwerkzeug wird geschlossen; und der Hohlraum zwischen Trägerteil und dem Lederkleid wird ausgeschäumt.

Nach Entnahme aus dem Schäumwerkzeug wird in einem zweiten manuell auszuführenden Verfahrensschritt der restliche Teil des Lederkleides in konventioneller Klebetechnik in den stärker räumlich gekrümmten Oberflächenbereichen des Trägerteiles aufgeklebt.

Weiterhin wird vorgeschlagen, die Zuschnitteile des Lederkleides im Bereich der Hinterschäumung vor dem Vernähen auf ihrer dem Trägerteil zugewandten Rückseite schaumdicht zu machen, sowie die Nähte des Lederkleides zumindest im Bereich der Hinterschäumung gegen Durchtritt von Schaum abzudichten.

Der Erfindung liegt das technische Problem zugrunde, einen Schutzhelm mit einer Außenschicht aus Leder zu schaffen, der ein besonders attraktives Aussehen aufweist, und der einfach und im industriellen Maßstab gefertigt werden kann.

Weiterhin soll der Schutzhelm hohen Tragekomfort gewährleisten, geringes Gewicht aufweisen und die Sicherheitsanforderungen für die jeweils vorgesehenen Anwendungen oder Bestimmungen erfüllen.

Eine erfindungsgemäße Lösung dieser Aufgabe ist ein Schutzhelm mit den Merkmalen des Anspruches 1.

Ein bevorzugtes Verfahren zur Herstellung solcher Schutzhelme ist gekennzeichnet durch die Verfahrensschritte des Anspruches 16.

Vorteilhafte Ausgestaltungen und Weiterbildungen der Erfindung ergeben sich aus den Unteransprüchen.

Der erfindungsgemäße Schutzhelm weist ein besonders hochwertiges, dekoratives oder attraktives Ausehen auf, im wesentlichen bestimmt wird durch die Optik, die Struktur und/oder die Charakteristik des Deckschichtmaterials, aus naturlichem Leder.

Weiterhin wird das dekorative Aussehen durch erhabene Abschnitte und/oder Strukturen gesteigert, die im Verlauf des Ausschäumvorganges durch Tiefziehen der Lederschicht erzeugt werden. Zusätzlich kann das hochwertige Aussehen durch eine ledertypische Be- und Verarbeitung gesteigert werden, beispielsweise durch deutlich sichtbare Nähte und/oder Überdeckung der Stoßfugen zwischen benachbarten Segmenten mit einem Keder, der seinerseits mit einem Lederband überzogen ist. Das erfindungsgemäße Herstellungsverfahren und die gesamte Verarbeitung erlaubt die Erzeugung einer typischen hochwertigen "Lederoptik". Weiterhin ist darauf geachtet, daß an der Außenfläche des Schutzhelms erforderliche Befestigungselemente, beispielsweise zur Anbringung eines Kinnriemens, nicht sichtbar sind, sondern mit einem nachträglich angebrachten Dekorstück mit Lederoberfläche überdeckt sind.

Der erfindungsgemäße Schutzhelm weist einen hohen Tragekomfort auf. Zu diesem Tragekomfort tragen maßgeblich bei, daß der geschäumte Kunststoffkern aus einem weichen oder halbharten Polyurethanschaum besteht, und daß die Verbindung zwischen benachbarten Segmenten in Grenzen elastisch ausgeführt ist. Insoweit ist die Helmschale des erfindungsgemäßen Schutzhelmes zwar stabil, jedoch nicht völlig steif und starr.

Der erfindungsgemäße Schutzhelm weist trotz des Aufbaus aus mehreren Segmenten eine Helmschale auf, deren Stabilität die Sicherheitsanforderungen für die jeweils vorgesehenen Anwendungen oder Bestimmungen erfüllt. Beispielsweise erfüllt der erfindungsgemäße Schutzhelm die Anforderungen an die Stoßdämpfung für Sportschutzhelme, insbesondere Radfahrhelme gemäß DIN 33 954. Bei der Prüfung der Stoßdämpfung gemäß DIN 33 954 lag die resultierende Beschleunigung an allen Meßpunkten unterhalb 200 g. In jedem Falle lag die Einwirkzeit einer Beschleunigung von 150 g unterhalb 3 ms. Die Prüfungen für andere Einsatzzwecke, beispielsweise als Motorrad-Schutzhelm konnten noch nicht abgeschlossen werden.

Schließlich weist der erfindungsgemäße Schutzhelm ein überraschend geringes Gewicht auf. Typischerweise beträgt das Gewicht eines fertigen Helmes einschließlich Innen-Polsterung und -Ausstattung weniger als 1500 g, vorzugsweise weniger als 1400 g. Beispielsweise wurde an einem fertigen Helm der Größe "large" (Kopfumfang etwa 56 bis 58 cm) ein Gewicht von etwa 1350 g bestimmt. Dieses für Vollhelme überraschend geringe Gewicht und der nicht völlig starre/steife Charakter der Helmschale tragen erheblich zum hohen Tragekomfort des Schutzhelmes bei.

Als Deckschichtmaterial dient natürliches Leder ist. Mit natürlichem Leder kann ein besonders attraktives Aussehen mit hochwertiger echter Lederoptik erzielt werden. Ferner ist echtes Leder unvermeidlich mit gewissen Markierungen und Unregelmäßigkeiten versehen, welche den gesamten Lederhelm den Eindruck eines Unikates verleihen. Gut geeignet ist beispielsweise das Leder von Büffel, Rind, Kalb, Hirsch und Antilope, das vorzugsweise eingesetzt wird. Das natürliche Leder ist in üblicher Weise vorbehandelt, gegerbt und gefärbt worden. Das Leder soll an der für die Außenseite bzw. Sichtseite des Helmes vorgesehenen Oberfläche eine glatte Struktur bzw. Optik aufweisen. Das Leder kann eine Dicke bzw. Stärke von etwa 0,7 bis 2,1 mm aufweisen. Im Rahmen des erfindungsgemäßen Verfahrens wird auch die Tiefziehfähigkeit von natürlichem Leder ausgenutzt. Das eingesetzte Leder soll daher elastisch und tiefziehfähig sein.

Die für die jeweiligen Segmente erforderlichen Lederstücke werden aus einem größeren Abschnitt zugeschnitten. Dies kann zweckmäßigerweise mit einer Schwenkarmstanze geschehen, die mit einem Stanzeisen oder Stanzmesser ausgerüstet ist. Das für ein bestimmtes Segment vorgesehene Lederstück wird auf eine Größe zurechtgeschnitten, die gegenüber dem Segmentumfang einen umlaufenden Rand mit einer Breite von mehreren Zentimetern gewährleistet.

Nach einem wichtigen Gesichtspunkt der Erfindung wird die Lederschicht benachbart zum Kunststoffkern mit einer Kaschierung versehen. Diese Kaschierung ist bei Verwendung von natürlichem Leder unerläßlich, da andernfalls im Verlauf des Ausschäumvorganges der noch flüssige Kunststoff durch im natürlichen Leder notwendigerweise vorhandene Poren hindurch zur Sichtseite gelangen und diese verunreinigen würde.

Zur Kaschierung von natürlichem Leder kann vorzugsweise ein Acryllack eingesetzt werden, wie er ansonsten für Anstrichzwecke verwendet wird. Zusätzlich enthält der Acryllack Bestandteile, welche eine dauerhafte Elastizität gewährleisten. Dieser modifizierte Acryllack wird mit Hilfe eines Pinsels oder dergleichen in üblicher Anstrichstärke vollflächig auf derjenigen Lederoberfläche aufgebracht, welche nachfolgend unlösbar mit dem Kunststoffschaum verbunden wird. Die Kaschierung wird getrocknet, bevor das Leder in die Form zur Aufbringung des Kunststoffkerns eingebracht wird.

Eine erfindungsgemäß vorgesehene Helmschale ist aus mehreren Segmenten zusammengesetzt. Beispielsweise können drei Segmente vorgesehen sein, nämlich ein Mittelteil, das die Stirn, den Schädel und den Hinterkopf eines Benutzers bedeckt, sowie je ein Seitenteil, das je eine Schläfen- und Wangenpartie des Benutzers bedeckt. Dieses Mittelteil weist eine erhebliche Krümmung auf und erfordert deshalb eine vergleichsweise aufwendige Form zur Herstellung.

Mehr bevorzugt ist deshalb eine Helmschale, die aus vier Segmenten zusammengesetzt ist, nämlich einem Vorderteil, das die Stirn und die vordere Schädelpartie eines Benutzers bedeckt, einem Hinterteil, das die hintere Schädelpartie und den Hinterkopf des Benutzers bedeckt, und je ein Seitenteil, das je eine Schläfen- und Wangenpartie des Benutzers bedeckt. In diesem Falle weist jedes Segment einen vergleichsweise einfachen Umfang auf. Der Umfang des Vorderteils und des Hinterteils ist im wesentlichen rechteckig. Der Umfang der beiden, zueinander symmetrischen Seitenteile ist im wesentlichen pilzförmig, wobei im Pilzstiel Mittel zur Befestigung eines Kinnriemens vorgesehen werden.

Jedes Segment weist einen Kunststoffkern auf, dessen Schichtdicke im Mittel etwa 30 bis 40 mm beträgt. Die Schichtdicke erreicht die höchsten Werte im Bereich der konkruenten Paßflächen benachbarter Segmente. Die Schichtdicke fällt zu den freien Randabschnitten hin ab. In einem weiten Bereich der Seitenteile kann eine geringere Schichtdicke von etwa 5 bis 20 mm ausreichend sein.

Angrenzend zu einem benachbarten Segment weisen die Segmente an ihrem Umfang im wesentlichen ebene konkruente Paßflächen auf, die gegenüber der gewölbten Hauptfläche leicht schräggestellt sind, so daß beim Aneinandersetzen der Segmente insgesamt eine kugelförmige Kalotte erzielt wird. Benachbart zur Außenseite kann in diesen Paßflächen eine Rille ausgespart sein, in welche später der biegsame Schlauch eines Keders eingelegt wird.

Die in den Kunststoffkern eingebetteten Befestigungsmittel zur dauerhaften, nicht lösbaren Verbindung benachbarter Segmente sind vorzugsweise vertikal zu diesen Paßflächen ausgerichtet. Diese Befestigungsmittel umfassen insbesondere Aufnahmeteile, wie das nachstehend noch im einzelnen ausgeführt wird. Solche Aufnahmeteile schließen bündig mit der Paßfläche ab.

Im Gegensatz zu den bekannten Vorschlägen für zerlegbare Helme, die Nut- und Federprofile längs der gesamten Länge einer Paßfläche aufweisen, sind erfindungsgemäß einzelne, isolierte Befestigungsmittel vorgesehen, die im Abstand zueinander angeordnet sind. Beispielsweise ist zur Verbindung von Vorderteil mit Hinterteil lediglich ein gemeinsam fluchtendes Befestigungsmittel vorgesehen, das etwa mittig in der Paßfläche angeordnet ist. Zur Befestigung eines Vorderteiles an einem Seitenteil sind vorzugsweise zwei im Abstand zueinander angeordnete, gegenseitig fluchtende Befestigungsmittel vorgesehen. Zur Verbindung eines Hinterteiles mit einem Seitenteil sind vorzugsweise drei, miteinander fluchtende und im Abstand zueinander angeordnete Befestigungsmittel vorgesehen.

Weiterhin können die Segmente zusätzliche Befestigungsmittel aufweisen, die über deren Hauptflächen wirken und auf der Außenseite zur Anbringung von Dekorteilen dienen und die auf der Innenseite zur Anbringung von Polstern und dergleichen dienen. Dies wird nachstehend noch im einzelnen ausgeführt.

Nach einem weiteren Gesichtspunkt der Erfindung ist an wenigstens einem Segment wenigstens ein erhabener Abschnitt und/oder wenigstens eine erhabene dekorative Struktur ausgebildet, der/die über die restliche Segmentoberfläche vorsteht. Dieser erhabene Abschnitt und/oder diese erhabene dekorative Struktur ist durch Tiefziehen der Lederschicht im Verlauf der Ausschäumung des Kunststoffkerns erzeugt worden. Gerade mit natürlichem Leder lassen sich nach dem erfindungsgemäßen Verfahren in Anpassung an eine entsprechend ausgestaltete Form überrachend klare, ausdrucksstarke und mit feinen Details ausgezeichnete Strukturen darstellen. Einzelne Strukturmerkmale der erhabenen Struktur können 20 bis 30 mm und mehr über die Segmentoberfläche vorstehen. Beispielsweise ist eine erhabene Struktur in Form eines Panterkopfes realisiert worden, an dem feinste Details wie Augen, Gesichtszüge und gefletschte Zähne ohne weiteres erkennbar sind. Eine andere erhabene Struktur ahmt den Kopf eines Seeadlers nach, an dem ohne weiteres das Gefieder, die Augen und der scharfkantige Schnabel erkennbar sind.

Eine solche erhabene dekorative Struktur ist vorzugsweise an dem als Vorderteil dienenden Segment oder an einem vorderen Abschnitt des als Mittelteiles dienenden Segment ausgebildet. Eine solche erhabene Struktur an diesen Segmenten trägt besonders zum attraktiven Aussehen der erfindungsgemäßen Lederhelme bei. In diesem Falle ist die dekorative Struktur einstückig an der Oberfläche des jeweiligen Segmentes ausgebildet.

Nach einem weiteren Gesichtspunkt der Erfindung können alternativ und/oder zusätzlich Dekorteile vorhanden sein, welche den gleichen Aufbau wie die Segmente aufweisen, nämlich eine Deckschicht aus Leder, an welche in situ in Kern aus geschäumtem Kunststoff angeformt worden ist. Diese Dekorteile sind mit einer erhabenen, dekorativen Struktur versehen, die durch Tiefziehen der Lederschicht im Verlauf der Ausschäumung des Kunststoffkerns erzeugt worden ist. Diese Dekorteile können dauerhaft oder lösbar und auswechselbar mit einem Segment verbunden sein. Beispielsweise kann die erhabene Struktur an diesen Dekorteilen den vorstehend beschriebenen Panterkopf oder Seeadlerkopf nachahmen oder den Kopf eines Reptils. Solche Dekorteile werden an dem als Vorderteil dienenden Segment oder an einem vorderen Abschnitt des als Mittelteiles dienenden Segment angebracht. Ferner sind weitere Dekorteile vorgesehen, die an den als Seitenteilen dienenen Segmenten anbringbar sind und die ebenfalls eine erhabene dekorative Struktur aufweisen, die einen Bezug zum Motiv der Struktur am Vorderteil bzw. Mittelteil hat. In Verbindung mit einem Seeadlerkopf kann die erhabene Struktur der Dekorteile für die Seitenteile beispielsweise Feder schwingen nachahmen oder die typische Abbildung eines mit Krallen versehenen Fußes eines Vogels.

Nach einem weiteren Gesichtspunkt der Erfindung besteht der Kunststoffkern der Segmente und/oder Dekorteile aus einem ausgehärteten Polyurethanschaum. Vorzugsweise wird ein weicher oder halbharter PU-Schaum eingesetzt; gut geeignet sind beispielsweise PU-Schäume dieser Art, wie sie typischerweise zur Hinterschäumung tiefgezogener Folien eingesetzt werden. Ein solcher PU-Schaum wird in an und für sich bekannter Weise aus einer höher funktionellen Di-Isocyanat-Komponente und einer Polyäther-Polyalkohol-Komponente erzeugt, wobei als Treibmittel CO₂ dient, das im Verlauf der Reaktion durch einen Wassergehalt der Komponenten freigesetzt wird. Weitere Einzelheiten sind nachstehend bei der Erläuterung des Herstellungsverfahrens aufgeführt.

Der erfindungsgemäße Schutzhelm weist eine stabile Helmschale auf, die aus mehreren Segmenten aufgebaut ist, wobei benachbarte Segmente über ein oder mehrere Befestigungsmittel dauerhaft miteinander verbunden sind. Vorzugsweise sind solche Befestigungsmittel vorgesehen die je eine Steckverbindung liefern, wobei jede Steckverbindung wenigstens ein Aufnahmeteil und ein Steckteil aufweist. Besonders bevorzugt ist vorgesehen, daß
- benachbarte Segmente an ihrem Umfang komplementäre Paßflächen aufweisen, die aus der Oberfläche des Kunststoffkerns gebildet sind;
- in diesem Kunststoffkern sind Aufnahmeteile eingebettet und verankert, die einen Aufnahmeschacht begrenzen, der im wesentlichen senkrecht zu der Paßfläche ausgerichtet ist und bündig mit dieser abschließt;
- an benachbarten Segmenten sind jeweils paarweise einander zugeordnete und miteinander fluchtende Aufnahmeteile vorgesehen;
- jedes Steckteil ist ein unabhängig handhabarer, länglicher Körper mit zwei gegenüberliegenden Endabschnitten; und
- durch Einführen je eines Steckteil-Endabschnittes in den Aufnahmeschacht je eines passenden, mit dem anderen fluchtenden Aufnahmeteils wird eine dauerhafte und unlösbare Steckverbindung zwischen diesen beiden Segmenten erzeugt.

Indem an jedem Segment nur Aufnahmeteile vorgesehen werden, die bündig mit der Paßfläche des Segmentes abschließen, kann mit einer einfacher aufgebauten Form gearbeitet werden, aus der sich das Segment leichter entnehmen läßt, weil das Segment keine einstückig damit verbundenen, vorstehenden Abschnitte aufweist. Die Anwendung eines unabhängig handhabbaren Steckteiles, das als Verbindungsteil in zwei einander zugeordnete Aufnahmeteile eingeführt wird, erlaubt es ohne weiteres, dieses Steckteil aus einem Werkstoff geeigneter Festigkeit zu fertigen.

Diese erfindungsgemäße Ausgestaltung der Befestigungsmittel erleichtert ganz wesentlich die Erzeugung einer stabilen Helmschale aus mehreren Segmenten.

Nach einer weiteren vorteilhaften Ausgestaltung sind am Aufnahmeschacht (bzw. am Steckteil) Aussparungen ausgebildet, und am Steckteil (bzw. am Aufnahmeschacht) sind passende Vorsprünge angeformt, die beim Einführen eines Steckteil-Endabschnittes in den Aufnahmeschacht unter elastischer Verformung in die zugeordnete Aussparung eingreifen und so eine dauerhafte und nicht erneut lösbare Verbindung von Steckteil und Aufnahmeteil gewährleisten. Auf diese Weise werden benachbarte Segmente dauerhaft und nicht lösbar miteinander verbunden. In Verbindung mit der eigenen Stabilität und Festigkeit der Segmente ergibt diese Art der Verbindung eine stabile Helmschale.

Nach einer weiteren vorteilhaften Ausgestaltung ist am Aufnahmeteil ein Verankerungsteil angebracht, vorzugsweise einstückig angeformt, das im Verlauf der Ausschäumung des Kunststoffkerns in den Kunststoffkern eingebettet wird. Zu diesem Zweck wird das Aufnahmeteil anfänglich auf einen Vorsprung an der Form aufgesteckt, der in den Formhohlraum zur Erzeugung des Kunststoffkerns hineinragt.

Vorzugsweise ist vorgesehen, daß ein Aufnahmeteil im wesentlichen nur über sein Verankerungsteil mit dem Kunststoffkern verbunden ist, so daß am Außenumfang des Aufnahmeschachtes ein freier Spalt oder Zwischenraum verbleibt bis zum angrenzenden Kunststoffkern. Diese Ausgestaltung gewährleistet eine gewisse Beweglichkeit des Aufnahmeteiles gegenüber dem Kunststoffkern. Dieser Spalt oder Zwischenraum kann einfach dadurch erzeugt werden, daß an der Form ein passender vorstehender Rohrabschnitt angebracht ist, in welchen das Aufnahmeteil lösbar eingesetzt wird. Die Wandstärke dieses Rohrabschnittes liefert nach Ausschäumung und Aushärtung des Kunststoffes diesen Spalt oder Zwischenraum.

Diese Ausgestaltung schafft eine gewisse Beweglichkeit des Aufnahmeteiles gegenüber dem Kunststoffkern. Nach Einsetzen eines Steckteiles in die einander zugeordneten, fluchtenden Aufnahmeteile an benachbarten Segmenten wird so eine gewisse elastische Verformbarkeit des einen Segmentes gegenüber dem anderen Segment erhalten. Die elastische Verformbarkeit des einen Segmentes gegenüber dem anderen Segment aufgrund der elastischen Eigenschaften des PU-Schaumes und/ oder aufgrund der elastischen Eigenschaften der gegenseitigen Befestigungsmittel trägt wesentlich zum Tragekomfort des erfindungsgemäßen Schutzhelmes bei.

Zusätzlich zu den Befestigungsmitteln zur gegenseitigen Verbindung benachbarter Segmente sind an jedem Segment zusätzliche Befestigungselemente angebracht, mit deren Hilfe eine Dekorteil, ein Polster, ein Kinnriemen und/oder ein sonstiger Bestandteil der Innenausstattung lösbar an dem Segment angebracht werden kann.

Im Falle der lösbaren Anbringung eines Dekorteiles kann dieses Befestigungselement in Form einer Nietverbindung ausgebildet sein, die in üblicher Weise aus einem Niet, einem damit dauerhaft verbundenen Kugelteil und einem lösbaren Federteil am Dekorteil besteht. An der vorgesehenen Stelle für die Nietverbindung ist am Segment ein von der Innenseite her offener Abschnitt mit vermindertem Querschnitt ausgebildet. In diesem Abschnitt wird der Niet von innen nach außen gesetzt, so daß das Kugelteil über die Lederoberfläche vorsteht. Das Federteil ist dann in passender Anordnung in den Kunststoffkern des Dekorteiles eingesetzt.

Im Falle der Anbringung eines Polsters, eines sonstigen Weichteiles und/oder Bestandteile der Innenausstattung eines Helmes sind in den Kunststoffkern der Segmente Federteile einer Nietverbindung eingesetzt. Diese Federteile sind zur Innenseite der Segmente hin geöffnet und fluchten mit dieser Innenseite.

In jedem Falle sind solche Federteile mit einem großflächigen Verankerungsteil, beispielsweise in Form einer Rosette versehen, das im Verlauf der Ausschäumung des Kunststoffkerns in dem Dekorteil oder in dem Segment eingebettet wird.

Nach einer weiteren vorteilhaften Ausgestaltung sind die Stoßfugen zwischen benachbarten Segmenten mit einem Keder überdeckt. Solche Keder sind an und für sich aus der Herstellung von Polstermöbeln bekannt. Ein solcher Keder besteht aus einem biegsamen Rohr und einstückig angeformten Seitenflügeln aus flexiblem Kunststoff. Diese Seitenflügel sind mit einem Lederband eingefaßt. Das Lederband ist längs seiner Randitreifen mit der Lederschicht an der Außenfläche der Segmente vernäht. Am fertigen Schutzhelm ist lediglich das die Stoßfugen überdeckende Lederband sichtbar. Das Lederband und die Nähte erhöhen die typische Lederoptik des erfindungsgemäßen Lederhelmes.

Ferner ist der erfindungsgemäße Schutzhelm in an und für sich bekannter Weise mit einer Innenausstattung und/oder Innenpolsterung versehen. Die Innenausstattung kann ein einstückiges flexibles Teil sein, das im Sinne einer Steppdecke aufgebaut ist. Zwischen zwei Deckschichtmaterialien sind sandwichartig einzelne, voneinander getrennte Polster aus ausgesprochenem Kunststoff-Weichschaum oder -Softschaum eingebettet. Am Umfang weist dieses Teil Einschnitte und Aussparungen auf, so daß beim Aneinanderlegen der einzelnen Abschnitte im wesentlichen ein Segment einer Kugelkalotte entsteht. Die Herstellung kann in vergleichbarer Weise wie die Erzeugung der Helmschalensegmente erfolgen. In einer geeigneten Form wird zwischen zwei einstückigen Deckschichtmaterialien in situ eine Anzahl voneinander getrennter Polster aus Weich- oder Softschaum erzeugt und ausgeschäumt. Die meisten Polster weisen eine rechteckige Kontur mit Seitenlängen von etwa 3 bis 10 cm auf. Verbunden sind die einzelnen Polster über die beiden Lagen des Deckschichtmaterials, die im Sinne eines Filmscharnieres wirken und eine leichte Abknickbarkeit eines Polsters gegen ein benachbartes Polster gewährleisten. Für die beiden Hauptflächen können unterschiedliche Deckschichtmaterialien gewählt werden, beispielsweise für eine Lage natürliches Leder und für die andere Lage ein Syntheseleder (wie beispielsweise ALCANTARA). Die Befestigugng dieser Innenausstattung an der Innenseite der Helmschale erfolgt über Kugel- und Federteile. Die Kugelteile sind mit Hilfe eines Niets an einem Polster der Innenausstattung befestigt. Auf der Rückseite des entsprechenden Polsters ist ein weiteres Polster gleicher Aufmachung aufgenäht oder angeklebt, so daß der Nietfuß zwischen zwei Polstern eingebettet ist. Die zur Befestigung dieser Innenausstattung erforderlichen Federteile sind in die Segmente der Helmschale eingebettet, öffnen sich zu deren Innenseite und schließen mit dieser bündig ab.

Ferner ist eine Polsterung vorgesehen, die aus einem Nackenpolster sowie aus einem Stirn- und Schläfenpolster besteht. Jedes Polster hat im wesentlichen die Form eines breiten Streifens aus Weich- oder Softschaum, der wenigstens auf der Sichtseite oder allseitig mit Deckschichtmaterial eingefaßt ist. Mit diesen Polsterbändern ist der gesamte Randbereich des Helmes an der Innenseite der Helmschale eingefaßt. Die Polsterbänder sind dort angenäht und/oder angeklebt.

Schließlich sind Befestigungselemente und eine Schließvorrichtung für einen Kinnriemen vorgesehen.

Ein weiterer wichtiger Gesichtspunkt der Erfindung betrifft ein Verfahren zur Herstellung solcher Schutzhelme. Dieses Verfahren ist gekennzeichnet durch nachstehende Verfahrensschritte:
a) für jedes Segment wird eine mehrteilige, verschließbare, heizbare und evakuierbare Form bereitgestellt, deren Formhohlraum an die Kontur des Segmentes angepaßt ist;
b) es wird eine Form bereitgestellt, die wenigstens nachstehende Formteile aufweist;
   - eine Unterform, in deren Boden Bohrungen ausgespart sind, die an ein Unterdrucksystem angeschlossen sind;
   - einen Zwischenring, dessen Innenkontur an den Umfang der Segmente angepaßt ist;
   - eine Oberform mit einem Formstück, das in die Innenkontur des Zwischenringes einführbar ist;
c) auf den Boden der Unterform wird das Deckschichtmaterial aufgelegt und mit Hilfe von Unterdruck und gegebenenfalls mechanischer Unterstützung an den Boden der Unterform angesaugt und angepaßt;
d) der Zwischenring wird - bündig mit der Unterform - auf das Deckschichtmaterial aufgesetzt, das einen umlaufenden Randabschnitt aufweist, der zwischen die komplementären Paßflächen von Unterform und Zwischenring eingesetzt ist und dort wie eine Dichtung wirkt;
e) in den vom Zwischenring begrenzten Formhohlraum wird eine kleine dosierte Menge einer unmittelbar vorher erzeugten Mischung aus den Komponenten eines selbsttätig Schaum bildenden Systems eingebracht;
f) die Oberform wird abgesenkt, und die gesamte Form wird verschlossen und verriegelt;
g) die Form wird eine Zeitspanne lang geschlossen gehalten, bis der sich bildende Schaum den gesamten Formhohlraum ausgefüllt und sich formbeständig stabilisiert hat;
h) daraufhin wird die Form geöffnet, die Oberform und der Zwischenring angehoben, das Segment entnommen und soweit für die weitere Verwendung erforderlich, beschnitten, gereinigt und bearbeitet.

Als Deckschichtmaterial dient natürliches Leder, und das erfindungsgemäße Verfahren erlaubt die serienmäßige Herstellung von Lederhelmen in hoher Stückzahl.

Vorzugsweise ist vorgesehen, daß das Formstück und/oder der Zwischenring lösbar mit Befestigungsmitteln bestückt werden, die mit einem Verankerungsteil versehen sind, das im Verlauf der Schaumbildung in den Kunststoffkern eingebettet wird. Die Verankerungsteile können vergleichsweise großflächig in Form einer Rosette oder dergleichen ausgebildet sein, um eine gute, unlösbare Verankerung im Kunststoffkern zu gewährleisten.

Weiterhin können am Formstück und/oder am Zwischenring vorstehende, rohrförmige Abschnitte angebracht sein. In diese rohrförmigen Abschnitte werden lösbar die Aufnahmeteile der Befestigungsmittel zur dauerhaften Verbindung der Segmente untereinander eingesetzt. Die Wandstärke dieser Rohrabschnitte liefert nach Ausschäumung und Aushärtung des Kunststoffes einen freien Spalt oder Zwischenraum zwischen Aufnahmeteil und Kunststoffkern.

Das Vorderteil und/oder das Mittelteil der Helmschalensegmente weist an drei, im wesentlichen U-förmig angeordneten Paßflächen ein oder mehrere Befestigungselemente auf. In diesem Falle ist es erforderlich, einen gespaltenen, zweiteiligen Zwischenring zu verwenden, um das fertige, ausgeschäumte Segment aus dem Zwischenring entnehmen zu können.

Zur Herstellung des Kunststoffschaumkernes dienen vorzugsweise bekannte 2-Komponenten-Systeme zur Erzeugung von PU-Schäumen. Die eine Komponente ist ein flüssiges 4,4'-Diphenylmethan-diisocyanat mit einem bestimmten Gehalt an höher funktionellen Isocyanaten. Das Produkt ist lösungsmittelfrei und zumeist von tiefbrauner bis schwarzer Farbe. Die andere Komponente ist eine gebrauchsfertige Polyätherpolyol-Formulierung mit Zusatz von tertiären Aminen. Typischerweise kommen auf 100 Gew.-Teile Polyäther-polyol-Formulierung etwa 53 bis 54 Gew.-Teile Polyisocyanat-Komponente. Die beiden Komponenten werden aus ihren getrennten Lagerbehältern einem Handmischkopf zugeführt. In diesem Mischkopf erfolgt die zwangsweise innige Vermischung der Komponenten mit Hilfe von rotierenden Zahnrädern, Schlitzscheiben oder dergleichen. Weiterhin ist der Mischkopf mit einer Programmsteuerung ausgerüstet, welche die Abgabe exakt dosierter Mengen des erzeugten Gemisches ermöglicht. Mit Hilfe dieses Handmischkopfes wird die bestimmte Menge Gemisch in den Formhohlraum einer Form eingefüllt.

Entsprechende 2-Komponenten-Systeme zur Erzeugung von PU-Schaum können im Fachhandel bezogen werden; beispielsweise von BAYER AG unter den Bezeichnungen "DESMODUR" und "BAYFILL" oder "BAYFIT", oder von DOW CHEMICAL COMPANY unter den Bezeichnungen "VORANOL" und "VORANATE" oder von BÜSING & FASCH GmbH & Co., D-26180 Rastede, unter den Bezeichnungen "OLDOPUR" und "OLDOFILL". Im einzelnen werden solche Schaumsysteme ausgewählt, die weiche oder halbharte Formschäume liefern; gut geeignet sind beispielsweise Systeme dieser Art, wie sie typischerweise zur Hinterschäumung von tiefgezogenen Folien eingesetzt werden.

Die Verarbeitung und Schaumbildung erfolgt typischerweise bei einer Temperatur zwischen etwa 25 und 50° C. Entsprechend werden heizbare Formen verwendet, die mit Hilfe einer zirkulierenden Heizflüssigkeit auf dieser Temperatur gehalten werden.

Nach dem Einbringen des flüssigen Gemisches in den Formhohlraum wird die Form geschlossen und verriegelt. Nach einer Zeitspanne von etwa 6 bis 8 min ist die Schaumbildung abgeschlossen und der gebildete Kunststoffschaum ist soweit formstabil, daß die Form geöffnet und der gebildete Formkörper entnommen werden kann. Tatsächlich erfolgt daraufhin noch im Verlauf von etwa 15 bis 20 h eine Nachreaktion und Aushärtung des Schaumkernes. Nach dieser Aushärtung wird an typischen Produkten eine Dichte des Schaumkernes von etwa 0,18 bis 0,22 g/cm³, beispielsweise eine Dichte von etwa 0,2 g/cm³, sowie eine Härte, ausgedruckt als Shore Härte A von etwa 50 bis 55 bestimmt.

Die nach diesem Verfahren hergestellten Helme weisen eine Deckschicht aus natürlichem Leder, auf. Es ist erforderlich, das Leder "abzusperren"; das heißt, die in natürlichem Leder vorhandenen Poren müssen verschlossen werden, damit die flüssigen, schaumbildenden Komponenten nicht durch diese Poren hindurchtreten und die spätere Sichtseite des Leders beeinträchtigen können. Zu diesem Zweck wird die zum Lederkern benachbarte Lederoberfläche mit einer Kaschierung versehen. Als Kaschierung dient vorzugsweise eine Acryllack, wie er ansonsten für Anstrichzwecke eingesetzt wird. Durch zusätzliche Zusätze ist dieser Acryllack flexibel eingestellt worden. Dieser Acryllack wird mit Hilfe eines Pinsels oder dergleichen vollflächig auf der Lederoberfläche aufgetragen. Anschließend wird das Leder getrocknet. Das so vorbehandelte Leder wird daraufhin in die Unterform eingelegt und mit Hilfe von Unterdruck und/oder zusätzlicher Anpassung von Hand an den Boden und/oder die Aushöhlung in der Unterform angelegt und angepaßt.

Eine weitere Erläuterung der Formen zur Erzeugung der Helmschalensegmente und der Dekorteile an diesen Segmenten, sowie der Verbindung der einzelnen Segmente zu einer stabilen Helmschale und Anbringung der Dekorteile an dieser Helmschale erfolgt nachstehend mit Bezugnahme auf die Zeichnungen.

Nachstehend wird eine bevorzugte Ausführungsform eines erfindungsgemäßen Schutzhelmes einschließlich dessen Herstellung mit Bezugnahme auf die Zeichnungen erläutert; die letzteren zeigen:
- Figur 1: eine perspektivische Darstellung eines erfindungsgemäßen Lederhelmes schräg von vorne und von oben betrachtet;
- Figur 2: eine perspektivische Darstellung des Lederhelmes nach Fig. 1, jedoch hier schräg von hinten und von oben betrachtet und mit einer Explosionsdarstellung der seitlichen Dekorteile;
- Figur 3: anhand einer auseinandergezogenen, perspektivischen Darstellung den Aufbau der Helmschale aus vier Segmenten;
- Figur 4: ein als Hinterteil dienendes Segment;
- Figur 5: ein als Seitenteil dienendes Segment;
- Figur 6: ein mit einer tiefgezogenen Darstellung eines Pantherkopfes versehenes Dekorteil für ein als Vorderteil dienendes Segment;
- Figur 7: die Befestigungsmittel zum dauerhaften Verbinden von zwei Segmenten;
- Figur 8: ein Federteil und ein Kugelteil zum Anbringen von Dekorteilen, Polstern und dergleichen an der Helmschale;
- Figur 9: einen Ausschnitt aus einem Keder, der zum Überdecken der Stoßfuge zwischen benachbarten Segmenten dient;
- Figur 10: eine schematische Ansicht einer mehrteiligen Form zur erfindungsgemäßen Herstellung der Segmente für die Helmschale eines Schutzhelms;
- Figur 11: eine Draufsicht auf einen Zwischenring der Form nach Fig. 10; und
- Figur 12: eine schematische Schnittdarstellung der Form entsprechend der Schnittlinie 11-11 aus Fig. 11.

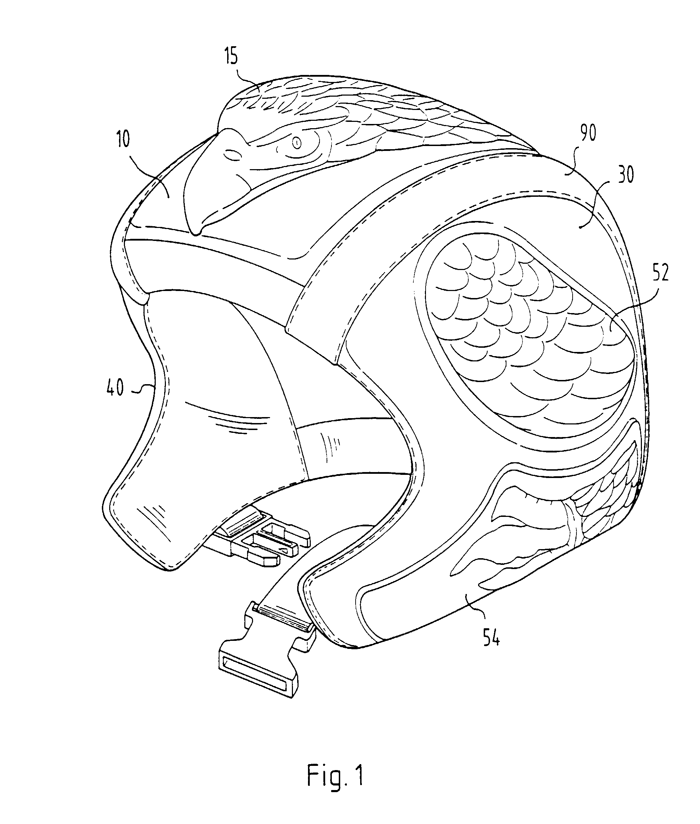

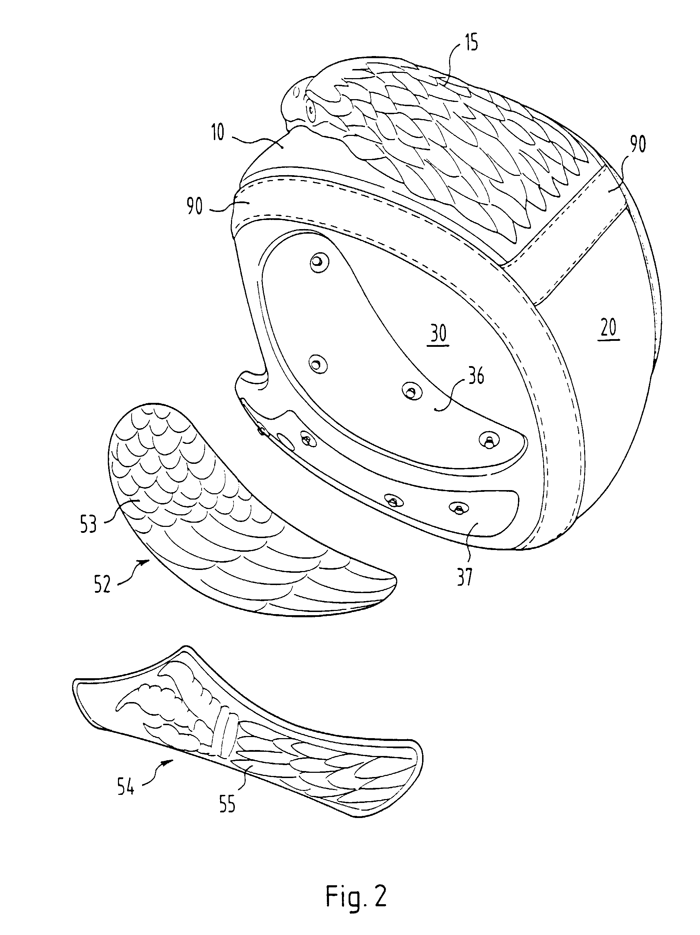

Die Figuren 1 und 2 vermitteln einen Eindruck vom Aussehen und der echten "Lederoptik" eines erfindungsgemäßen Schutzhelmes. Trotz der Serienfertigung in gewerbsmäßigem oder industriellem Maßstab sieht der fertige Helm wie ein handgefertigter Lederhelm aus. Zusätzlich erhöhen dreidimensional-plastische, tiefgezogene Strukturen das dekorative Aussehen des Schutzhelms.

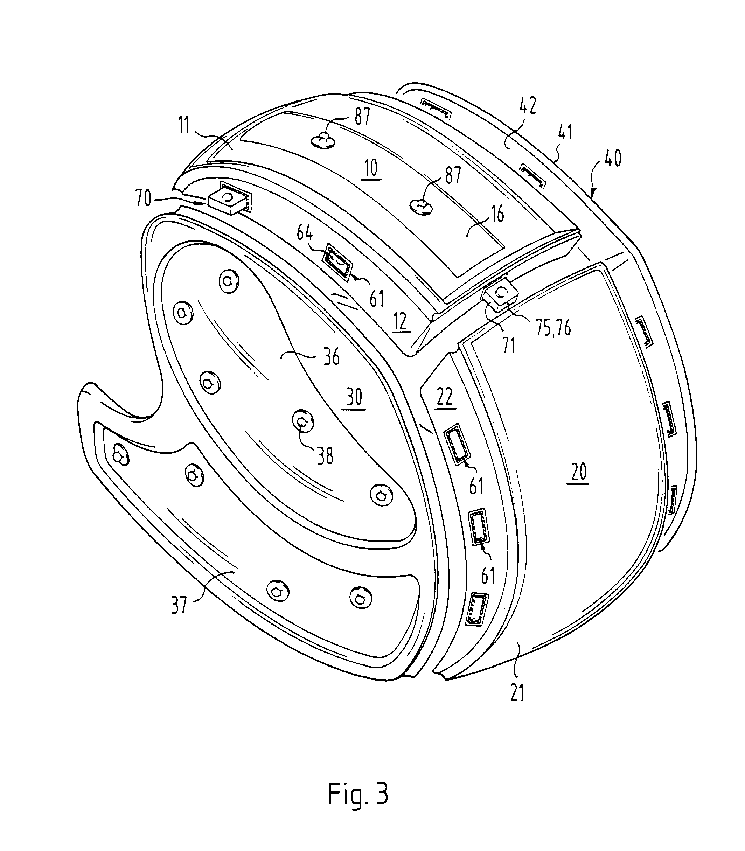

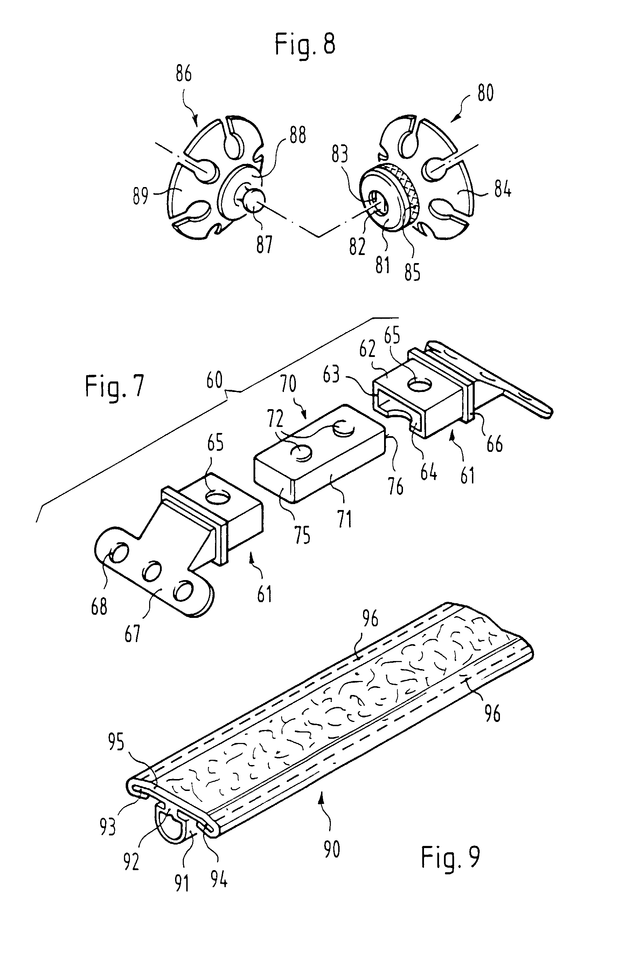

Aus Fig. 3 ist der Aufbau der Helmschale aus mehreren Segmenten ersichtlich. Bei dieser Ausführungsform besteht die Helmschale aus einem, als Vorderteil bezeichneten Segment 10, aus einem als Hinterteil bezeichneten Segment 20, aus einem als rechtes Seitenteil bezeichneten Segment 30 und einem als linkes Seitenteil bezeichnetes Segment 40. Jedes Segment ist mit dem benachbarten Segment über einzelne, isolierte Befestigungsmittel 60 verbunden, wie sie nachstehend mit Bezugnahme auf Fig. 7 erläutert werden.

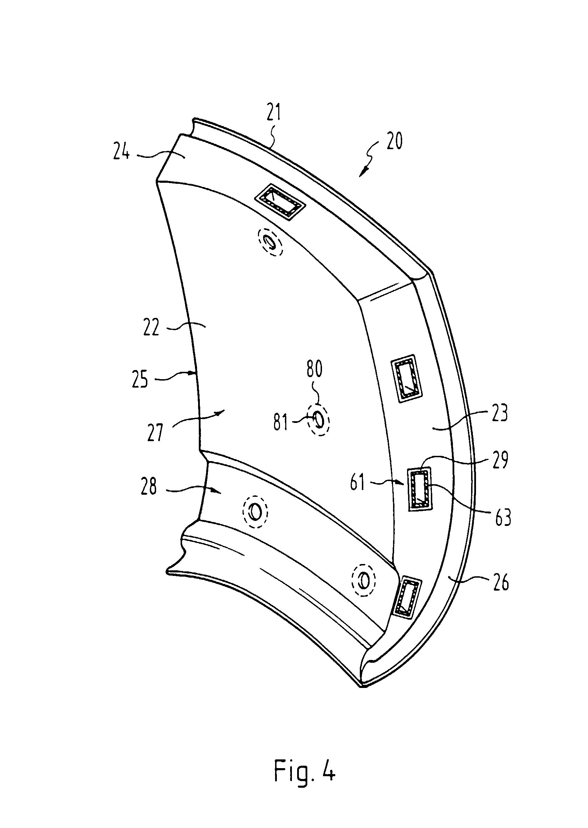

Die Fig. 4 zeigt ein einzelnes, als Hinterteil dienendes Segment 20. Dieses Segment 20 besteht im wesentlichen aus einem Kern 22 aus geschäumtem Kunststoff und aus einer Deckschicht 21 aus natürlichem Leder. Der Kunststoffkern 22 ist in situ an der in eine Form eingelegten Lederschicht 21 erzeugt und ausgeschäumt worden. Das Segment 20 ist leicht gewölbt ausgeführt und weist einen im wesentlichen rechteckigen Umriß auf, der an drei Seiten von den Paßflächen 23, 24 und 25 begrenzt ist. Diese Paßflächen 23, 24, 25 sind eben ausgeführt und gegenüber der gewölbten Hauptfläche leicht schräggestellt. Weiterhin ist - benachbart zur Außenseite - an den Paßflächen 23, 24, 25 eine umlaufende Nut 26 ausgespart, in welche später der Schlauch 91 eines Keders 90 (vgl. Fig. 9) eingelegt wird. Weiterhin weist der Kunststoffkern 22 eine Hauptfläche 27 auf, welche die Innenseite der Helmschale bildet. Im Bereich des Nackenstückes ist eine breite Nut 28 ausgespart, in welche später ein Nackenpolster eingelegt wird.

In die Paßflächen 23, 24 und 25 sind im Abstand zueinander mehrere Aufnahmeteile 61 der Befestigungsmittel 60 eingesetzt, wie sie nachstehend mit Bezugnahme auf Fig. 7 im einzelnen erläutert werden. In der Darstellung nach Fig. 4 ist von diesen Aufnahmeteilen 61 lediglich die umlaufende Stirnfläche 63 eines rechteckigen Aufnahmeschachtes 62 zu erkennen. Diese Stirnfläche 63 schließt bündig mit der jeweiligen Paßfläche 23, 24 und 25 ab. Weiterhin ist zu erkennen, daß sich zwischen dieser Stirnfläche 63 bzw. dem entsprechenden Aufnahmeschacht 62 und dem angrenzenden Abschnitt des Kunststoffkerns 22 ein umlaufender, freier Spalt 29 befindet.

In den Kunststoffkern 22 sind einzelne Federteile 80 eingebettet, deren Öffnung 82 bündig mit der Hauptfläche 27 des Kunststoffkerns abschließt. Diese Federteile 80 dienen zur Befestigung einer - nicht dargestellten - Innenausstattung bzw. eines Polsters an der Innenseite der Helmschale.

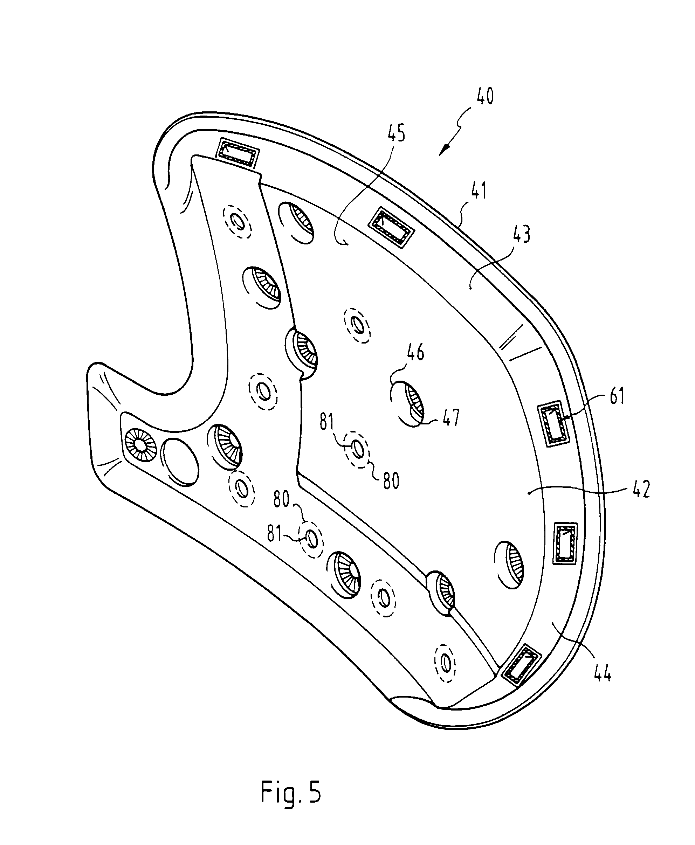

Die Fig. 5 zeigt die Innenseite eines als linkes Seitenteil dienendes Segment 40. Dieses Segment 40 weist grundsätzlich den gleichen Aufbau wie das vorstehend beschriebene Segment 20 auf und besteht im wesentlichen aus einer Deckschicht 41 aus Leder und einem daran in situ erzeugten Kunststoffkern 42. Dieses Segment 40 weist eine im wesentlichen pilzförmige Kontur auf, wobei der Pilzstiel einen als Kinnschutz dienenden Abschnitt der Helmschale bildet. Der Pilzhut wird von zwei, im wesentlichen rechtwinkelig aneinanderstoßenden Paßflächen 43 und 44 begrenzt. An die Paßfläche 43 wird die seitliche Paßfläche des als Vorderteil dienenden Segmentes 10 angesetzt. An die Paßfläche 44 wird die seitliche Paßfläche 25 des als Hinterteil dienenden Segmentes 20 angesetzt. In diese Paßflächen 43, 44 sind die bereits beschriebenen Aufnahmeteile 61 der Befestigungsmittel 60 eingesetzt.

Der Kunststoffkern 42 weist eine Hauptfläche 45 auf. Im Kunststoffkern 42 sind eine Anzahl runder Vertiefungen 46 ausgespart, die sich zu dieser Hauptfläche 45 hin öffnen. Am Grund dieser Vertiefungen 46 ist jeweils der Nietfuß 47 einer Nietverbindung zu erkennen. Zu dieser Nietverbindung gehören Kugelteile 38 (vgl. Fig. 3), welche über die Außenfläche der jeweiligen Segmente 30 bzw. 40 vorstehen und dort zur lösbaren und auswechselbaren Anbringung von Dekorteilen dienen. Innerhalb des Umfanges der Vertiefungen 46 weist der Kunststoffkern 42 einen verminderten Querschnitt auf, so daß dort das Setzen eines Niets erleichtert wird.

Weiterhin sind in den Kunststoffkern 42 eine Anzahl Federteile 80 eingesetzt, deren Öffnung 82 sich zur Innenseite 45 hin öffnet. Diese Federteile 80 dienen zur lösbaren Befestigung von nicht dargestellten Polstern an der Innenfläche des Segmentes 40.

Aus Fig. 3 ist ersichtlich, daß an der Außenseite eines als rechtes Seitenteil dienenden Segmentes 30 (und entsprechend an der Außenseite des als linkes Seitenteil dienenden Segmentes 40) großflächige Vertiefungen 36 und 37 ausgespart sind. In diese Vertiefungen werden lösbar Dekorteile 52, 54 eingesetzt, wie sie insbesondere aus Fig. 2 ersichtlich sind. Solche Dekorteile weisen an ihrer Außenseite eine erhabene dekorative Struktur 53, 55 auf. Das Motiv dieser Strukturen ist an das Motiv des Helmes angepaßt. Beispielsweise zeigt die dekorative Struktur 53 einen Vogelflügel, und die dekorative Struktur 55 zeigt einen Vogelfuß. Zur lösbaren Befestigung der Dekorteile 52, 54 dienen Federteile 80, welche in den Kunststoffkern dieser Dekorteile eingesetzt sind.

Beim Schutzhelm nach den Fig. 1 und 2 ist das als Vorderteil dienende Segment 10 ebenfalls mit einer dekorativen Struktur 15 versehen. Das Motiv dieser Struktur 15 ist der Kopf eines Seeadlers. Deutlich sind die Federn am Nacken, die Augen und der scharfkantige Schnabel zu erkennen. In diesem Falle ist die erhabene, dekorative Struktur 15 einstückig mit dem restlichen Segment 10 aufgebaut. Darüberhinaus ist das Segment 10 in gleicher Weise wie die anderen Segmente aufgebaut und besteht im wesentlichen aus einer Deckschicht 11 aus Leder, an der in situ ein Kunststoffkern 12 erzeugt und ausgeschäumt worden ist.

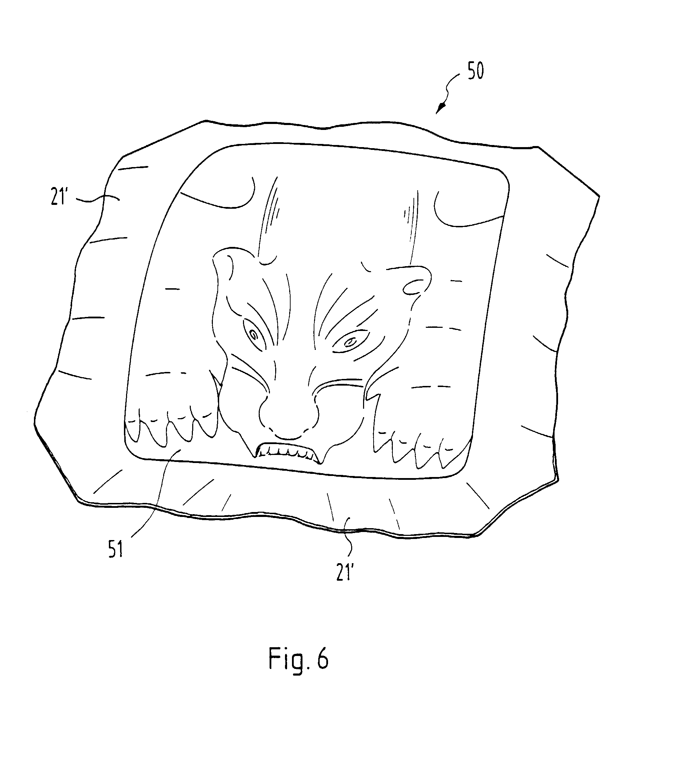

Bei einer alternativen, mit Fig. 3 dargestellten Ausführungsform des Segmentes 10 weist das Segment 10 an seiner Außenfläche eine großflächige Vertiefung 16 auf, in welche lösbar ein Dekorteil 50 eingesetzt werden kann, wie es beispielsweise mit Fig. 6 dargestellt ist. Dieses Dekorteil 50 ist an seiner Außenseite ebenfalls mit einer erhabenen, dekorativen Struktur 51 versehen, die in diesem Falle den Kopf eines Panthers nachahmt. Das Dekorteil 50 ist in gleicher Weise wie die Segmente und anderen Dekorteile aufgebaut und besteht im wesentlichen aus einer Deckschicht aus Leder, an der in situ ein Kunststoffkern erzeugt und ausgeschäumt worden ist. Zur lösbaren Befestigung dienen in den Kunststoffkern eingebettete Federteile 80, denen als Gegenstück Kugelteile 86 zugeordnet sind, welche über den Boden der Vertiefung 16 am Segment 10 vorstehen.

Die lös- und auswechselbare Anbringung unterschiedlicher Dekorteile 50, 52, 54, deren dekorative Strukturen 51, 53, 55 unterschiedliche Motive wiedergeben, erlaubt die Herstellung einer Grundform des Schutzhelmes in großer Stückzahl. Durch Arbringung unterschiedlicher Dekorteile kann diese Grundform leicht an die unterschiedlichen Kundenwünsche angepaßt werden.

Die Fig. 7 zeigt die Befestigungsmittel 60 zur gegenseitigen Befestigung benachbarter Segmente der Helmschale. Diese Befestigungsmittel 60 umfassen ein Aufnahmeteil 61 und ein Steckteil 70. Das Aufnahmeteil 61 ist ein einstückiger Spritzgußkörper aus thermoplastischem Kunststoff und besteht im wesentlichen aus einem vierkantigen Rohrabschnitt 62 (Aufnahmeschacht), an dem einstückig ein Verankerungsteil 67 angeformt ist. Der vierkantige Rohrabschnitt 62 begrenzt einen Aufnahmeschacht 64, der im vorliegenden Falle einen rechteckigen Querschnitt aufweist. Der vierkantige Rohrabschnitt 62 weist an einem Ende eine Stirnfläche 63 auf. In einer Hauptfläche des vierkantigen Rohrabschnittes 62 ist wenigstens eine Öffnung 65 ausgespart. Am Übergang des vierkantigen Rohrabschnittes 62 zum Verankerungsteil 67 befindet sich ein umlaufender vorspringender Rahmen 66. Im Verlauf der Herstellung der Segmente wird ein Aufnahmeteil 61 mit seinem vierkantigen Rohrabschnitt 62 in einen angepaßten Hülsenabschnitt 126 am Zwischenring 120 einer Form (vgl. Fig. 12) eingesetzt. Der umlaufende Rahmen 56 dichtet gegenüber dem Hülsenabschnitt 126 am Zwischenring 120 ab und verhindert, daß im Verlauf der Ausschäumung des Schaumsystems Schaum in den Aufnahmeschacht 64 eindringt. Das Verankerungsteil 67 weist eine größere Breite als der vierkantige Rohrabschnitt 62 auf und gewährleistet einen sicheren Sitz in dem ausgeschäumten Kunststoffkern. Zusätzlich ist das Verankerungsteil 67 mit Durchbrechungen 68 versehen, in welche im Verlauf des Ausschäumvorganges der sich bildende Kunststoffschaum eindringen kann. Auch dies erhöht den festen Sitz des Verankerungsteiles 67 und damit des gesamten Aufnahmeteiles 61 im Kunststoffkern.

Das Gegenstück zu den Aufnahmeteilen 61 ist ein Steckteil 70, das im vorliegenden Falle als quaderförmiges Körperchen 71 ausgebildet ist. Dieser quaderförmige Körper 71 weist an seiner Hauptfläche zwei im Abstand zueinander angeordnete Vorsprünge 72 auf, welche in die passenden Öffnungen 65 in der Hauptfläche des vierkantigen Rohrabschnittes 62 am Aufnahmeteile 61 passen. Die Oberflächen dieser Vorsprünge 72 sind leicht abgeschrägt. Weiterhin weist der quaderförmige bzw. längliche Körper 71 gegenüberliegende Endabschnitte 75 und 76 auf.

Bei der Herstellung der Segmente 10, 20, 30 und 40 werden Aufnahmeteile 61 in dem sich bildenden Kunststoffkern 12, 22, 42 eingebettet. Die Anordnung ist derartig, daß der Aufnahmeschacht 64 im wesentlichen vertikal zu einer Paßfläche, beispielsweise den Paßflächen 23, 24 und 25 am Segment 20 ausgerichtet ist und die Stirnfläche 63 des vierkantigen Rohrabschnittes 61 bündig mit der jeweiligen Paßfläche abschließt. An benachbarten, miteinander zu verbindenden Segmenten sind jeweils paarweise einander zugeordente Aufnahmeteile 61 vorgesehen, deren Aufnahmeschächte 64 miteinander fluchten, wie beispielsweise der Fig. 3 bezüglich der Segmente 10 und 20 bzw. bezüglich der Segmente 20 zu 40 zu entnehmen ist. Das Steckteil 70 wird mit einem Endabschnitt 75 voraus in einen Aufnahmeschacht 64 eingeführt. Die gegenseitigen Abmessungen sind eng aneinander angepaßt, so daß das Steckteil 70 stramm im Aufnahmeschacht 64 sitzt. Anschliessend wird das benachbarte Segment herangeführt und der andere Endabschnitt 76 des Steckteiles 70 in den passenden Aufnahmeschacht 64 des Aufnahmeteils 61 an diesem Segment eingeführt. Die Segmente werden fest zusammengedrückt, und hierbei rasten die Vorsprünge 72 am Steckteil 70 in die passenden Öffnungen 65 an dem vierkantigen Rohrabschnitten 62 ein. Es wird eine sichere, nicht erneut lösbare, formschlüssige Verbindung der beiden Aufnahmeteile 61, 61 über das gemeinsame Steckteil 70 erhalten. Auf diese Weise werden benachbarte Segmente dauerhaft miteinander verbunden. Es wird eine stabile Helmschale erhalten, die jedoch aufgrund der elastischen Eigenschaften des geschäumten Kunststoffkerns und der bestimmten Verankerung der Aufnahmeteile 61 innerhalb des Kunststoffkerns eine gewisse Flexibilität über die Verbindungsstellen aufweist. Diese Flexibilität trägt zum Tragekomfort des Schutzhelms bei.

Während der Erzeugung der Kunststoffkerne der Segmente innerhalb einer Form befinden sich die vierkantigen Rohrabschnitte 62 der Aufnahmeteile 61 in einem passenden vierkantigen Hülsenabschnitt 126 aus Metall, der am Innenumfang des Zwischenringes 120 (vgl. Fig. 11) vorgesehen ist. Da der vierkantige Rohrabschnitt 62 in diesen vierkantigen Hülsenabschnitt 126 eingesteckt ist, verhindert der Hülsenabschnitt 126 einen direkten Kontakt des Rohrabschnittes 62 mit dem Kunststoffschaum. Vielmehr erfolgt die Befestigung und Verankerung eines Aufnahmeteiles 61 lediglich über dessen Verankerungsteil 67. Nach der Entnahme des Segmentes aus der Form verbleibt am Umfang des vierkantigen Rohrabschnittes 62 des eingebetteten Aufnahmeteils 61 ein freier Spalt oder Zwischenraum entsprechend der Wandstärke des vierkantigen Hülsenabschnittes 126 bis zum umgebenden Kunststoffkern. Die Breite dieses Spaltes (29 in Fig. 4) kann bis zu etwa 1 mm betragen. Auf diese Weise wird eine gewisse Flexibilität des eingebetteten Aufnahmeteils 61 gegenüber dem umgebenden Kunststoffkern erhalten. Diese Flexibilität erleichtert das Aneinandersetzen benachbarter Segmente, steigert die Flexibilität der Verbindungsstelle und trägt so zum erhöhten Tragekomfort bei.

Die Fig. 8 zeigt Befestigungselemente zur wahlweise lösbaren Anbringung weiterer Komponenten an einem Segment bzw. an der aus den Segmenten gebildeten Helmschale. Zu solchen weiteren Komponenten gehören typischerweise die verschiedenen Dekorteile 50, 52, 54, sowie eine - nicht dargestellte - an der Innenseite der Helmschale anliegende Innenausstattung oder die in Fig. 1 ausschnittsweise erkennbaren Polster und/oder die Elemente zur Anbringung eines Kinnriemens. Die Anbringung dieser Komponenten erfolgt typischerweise über Steckverbindungen, die zwischen einem Steckteil und einem Aufnahmeteil gebildet werden. Als Aufnahmeteil kommt typischerweise ein Federteil 80 in Betracht. Als Steckteil kommt typischerweise ein angepaßtes Kugelteil 86 in Betracht.

Ein Federteil 80 weist typischerweise einen scheibenförmigen Kopf 81 mit einer mittigen Öffnung 82 auf. Hinter dieser Öfffnung sind zwei elastisch verformbare Federstäbe 83 im Abstand zueinander angeordnet. Die erfindungsgemäße Modifizierung solcher an und für sich bekannter Federteile 80 besteht darin, daß (a) Vorsorge getroffen ist, daß während der Ausschäumung des Kunststoffkerns keine Schaumstoffmasse in das Innere des Federteilkopfes 81 eindringt und daß (b) am Federteil 80 zusätzlich ein großflächiges Verankerungsteil 84 angebracht ist. Das Eindringen von Kunststoffschaum in den Federteilkopf 81 kann beispielsweise ein elastischer, weicher Abdichtring verhindern, der zwischen den Federteilkopf 81 und das Verankerungsteil 84 eingesetzt ist. Alternativ kann die Rückseite des Federteilkopfes 81 mit einem - nicht dargestellten - Klebeband abgedichtet werden.

Das Kugelteil 86 weist typischerweise einen kugelförmigen Kopf 87 auf, der einstückig im Abstand an einen plattenförmigen Fuß 88 angeformt ist. Der Kopf 87 hat solche Abmessungen, daß er in die Öffung 82 am Federteil paßt. Beim Einführen des kugelförmigen Kopfes 87 in den Kopf 81 des Federteiles 80 werden die Federstäbe 83 verformt, und der kugelförmige Kopf 87 hintergreift diese Federstäbe 83. Es wird in bekannter Weise eine lösbare Steckverbindung hoher Zugfestigkeit erhalten. Die erfindungsgemäße Modifizierung eines solchen an und für sich bekannten Kugelteiles 86 besteht darin, daß am Kugelteilfuß 88 dauerhaft ein großflächiges Verankerungsteil 89 angeformt ist. Diese Verankerungsteile 84, 89 könenn beispielsweise rosettenförmig ausgestaltet sein und können Durchbrechungen aufweisen.

Bei der Herstellung der Dekorteile 50, 52, 54 werden die vorstehend beschriebenen Federteile 80 in den Kunststoffkern dieser Dekorteile eingebettet. Zur Herstellung werden die Federteile 80 auf entsprechende kugelförmige Vorsprünge am Formstück der Oberform aufgesteckt. Nach Schließen der Form und Erzeugung und Ausschäumung des Kunststoffkerns werden die Verankerungsteile 84 unlösbar in den sich bildenden Kunststoffschaum eingebettet. Es wird eine solche Anordnung gewählt, daß die scheibenförmige Oberfläche des Federteilkopfes 81 bündig mit der Innenfläche der Dekorteile 50, 52, 54 abschließt.

Die Fig. 9 zeigt einen Abschnitt eines Keders 90, der zum Überdecken der Stoßfugen zwischen benachbarten Segmenten dient (vgl. auch Fig. 1 und 2). Ein solcher Keder 90 besteht im wesentlichen aus einem endlos langen biegsamen Rohr 91, an dem einstückig über einen Steg 92 zwei Seitenflügel 93 und 94 angeformt sind. Als Materialien für dieses Rohr 91 und die Seitenflügel 93, 94 kommt Gummi oder Weichplastik in Betracht. Die Seitenflügel 93, 94 sind mit einer Schicht 95 aus natürlichem Leder eingefaßt. Zumeist handelt es sich um das gleiche Leder, das auch die Deckschicht der Segmente 10, 20, 30 und 40 und der gegebenenfalls vorhandenen Dekorteile 50, 52, 54 bildet. Im Bereich der Randstreifen ist diese Lederschicht 95 mit Steppnähten 96 versehen.

Beim Zusammenbau der Helmschale wird der biegsame Schlauch 91 des Keders 90 in eine rillenförmige Aussparung (vgl. die Aussparung 26 am Segment 20) eingelegt, die in den komplementären Paßflächen (vgl. 23, 24 und 25 am Segment 20) benachbarter Segmente ausgespart ist. Die mit Leder beschichteten Seitenflügel 93, 94 des Keders 90 überdecken dann die Stoßfuge zwischen diesen beiden Segmenten. Im Bereich der Seitenstreifen wird die Lederschicht 95 des Keders 90 zusätzlich mit der Lederdeckschicht der Segmente vernäht.

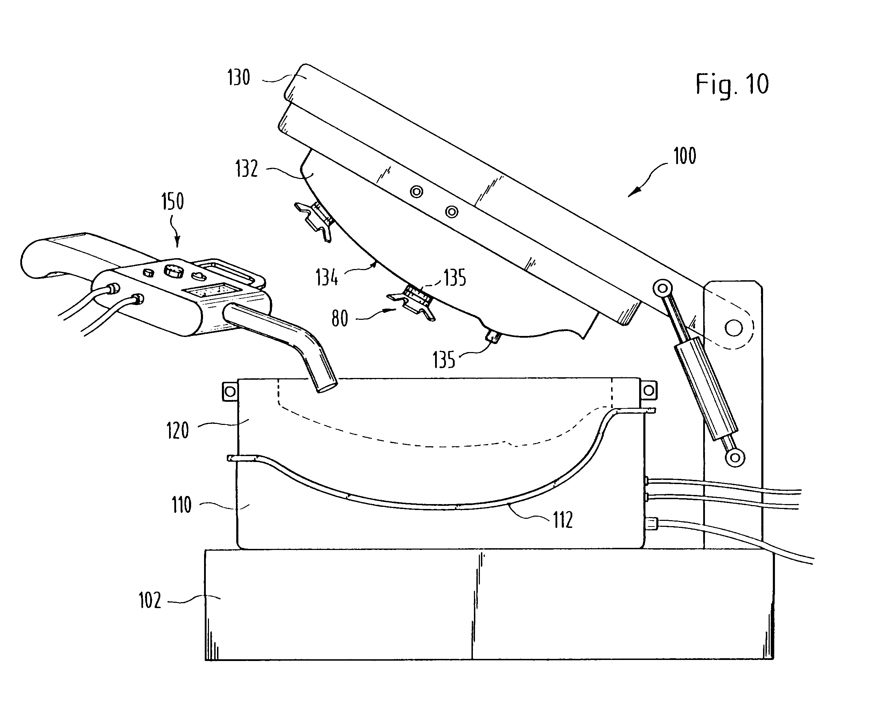

Mit den Fig. 10 bis 12 ist schematisch eine Form zur erfindungsgemäßen Herstellung eines Segmentes der Helmschale dargestellt. Diese Form 100 besteht im wesentlichen aus einer stationär angeordneten Unterform 110, einem auf diese Unterform 110 aufsetzbaren Zwischenring 120 und einer schwenkbar oder anhebbar und absenkbar angeordneten Oberform 130 mit einem Formstück 132. Die gesamte Form 100 ist heizbar und evakuierbar ausgebildet. Die Unterform 110 ruht stationär auf einem Tisch 102 oder dergleichen. An der Unterform 110 ist ein konkaver Boden und/oder Formhohlraum 112 ausgespart, dessen Form an die Außenkontur des herzustellenden Segmentes angepaßt ist. In den Boden 112 münden Kanäle 114, die an eine Pumpe zur Erzeugung von Unterdruck angeschlossen sind. Auf diesen Boden 112 wird das mit einer Kaschierung versehene Lederstück 21 aufgelegt und mit Hilfe des Unterdruckes und gegebenenfalls mit mechanischer Unterstützung per Hand angepaßt. Das Lederstück 21 weist einen ausreichend breiten Randabschnitt 21' auf, der die umlaufende Stirnfläche 116 der Unterform 110 zumindest teilweise bedeckt.

Auf diese Unterform 110 wird der Zwischenring 120 aufgesetzt. Dieser Zwischenring 120 weist Außenabmessungen auf, die mit dem Außenabmessungen der Unterform 110 fluchten. Für die Herstellung der Segmente 10 und 20 wird ein gespaltener bzw. zweiteiliger Zwischenring verwendet, wie er in Fig. 11 dargestellt ist. Dieser Zwischenring 120 besteht aus den beiden Zwischenringhälften 122 und 123, die mit Hilfe einer Schließeinrichtung 124 zu einem einheitlichen Zwischenring 120 verschließbar oder in die beiden getrennten Zwischenringhälften 122 und 123 zerlegbar sind. Der Zwischenring 120 weist eine Innenkontur 125 auf, die an den Umfang der Segmente, beispielsweise an die Paßflächen 23, 24 und 25 des Segmentes 20 angepaßt ist. Von der Innenkontur 125 des Zwischenringes 120 stehen einige vierkantige Hülsenabschnitte 126 nach innen vor. Die Hülsenabschnitte 126 weisen einen solchen Querschnitt auf, daß in diese Hülsenabschnitte 126 der vierkantige Rohrabschnitt 62 eines Aufnahmeteiles 61 eingesetzt werden kann. Dieses Aufnahmeteil 61 kann soweit eingesetzt werden, bis dessen umlaufender Rand 66 an der Stirnfläche des Hülsemabschnittes 126 anliegt und dort gegen das Eindringen von Kunststoffschaum abdichtet. Bei dieser Anordnung ragt das Verankerungsteil 67 in den vom Zwischenring 120 eingeschlossenen Innenraum 127 hinein.

An der Oberform 130 ist ein Formstück 132 befestigt, das in den vom Innenring 120 begrenzten Innenraum 127 einführbar ist. Dieses Formstück 132 weist eine Kontur 134 auf, welche beispielsweise die Innenfläche des Kunststoffkerns 22 am Segment 20 formt. Über diese Kontur 134 stehen einige Kugelköpfe 135 vor, auf welche je ein Federteil 80 aufsetzbar ist.

Nachdem die gesamte Form 100 die gewünschte Arbeitstemperatur aufweist, und
das Lederstück 21 in die Unterform 110 eingelegt und an deren Boden bzw. Formhohlraum 112 angepaßt worden ist, und
der Zwischenring 120 auf die Unterform 110 aufgesetzt und mit den erforderlichen Aufnahmeteilen 61 bestückt worden ist, und
am Formstück 132 der Oberform 130 die erforderlichen Federteile 80 angebracht worden sind,
wird mit Hilfe eines Handmischkopfes 150 die bestimmte Menge einer unmittelbar vorher erzeugten Mischung aus den Komponenten des selbsttätig schaumbildenden Systems in den vom Zwischenring 120 begrenzten Innenraum 127 eingebracht und gegebenenfalls auf der Lederschicht 21 verteilt.
Unmittelbar danach wird die Oberform 130 abgesenkt und zusammen mit dem Zwischenring 120 und der Unterform 110 verschlossen und verriegelt. Innerhalb weniger Minuten, beispielsweise etwa 6 bis 8 min erfolgt daraufhin die Bildung und Stabilisierung des Formschaumes innerhalb der geschlossenen Form 110. Als Treibmittel dient das bei der Reaktion freiwerdende CO₂. Der Formschaum füllt den gesamten Innenraum 127 aus und es entsteht beispielsweise der Kunststoffkern 22 am Segment 20. Daraufhin wird die Form 110 erneut geöffnet, der Zwischenring 120 in seine beiden Zwischenringhälften 122 und 123 zerlegt und daraufhin wird das rohe Segment 20 entnommen. An diesem rohen Segment 20 wird der überschüssige Lederrand 21' entfernt und noch gegebenenfalls notwendige Zurichtarbeiten ausgeführt. Im Verlauf weiterer 15 bis 20 h härtet der Formschaum weiter aus und der Kunststoffkern 22 erreicht dann seine endgültige Härte und Festigkeit.

Aus diesem Segment 20 und den in angepaßt ausgebildeten Formen hergestellten Segmenten 10, 30 und 40 wird mit Hilfe der oben beschriebenen Befestigungsmittel 60 eine stabile Helmschale für einen erfindungsgemäßen Schutzhelm zusammengesetzt.

In angepaßten, jedoch im wesentlichen gleichartig aufgebauten Formen können die Dekorteile 50, 52, 54, sowie gegebenemfalls die Polster und/oder die Innenausstattung erzeugt werden. Für die Polster und/oder Innenausstattung wird ein angepaßtes Schaumsystem verwendet, das die gewünschte Weichheit, Elastizität und Stoßenergie-Aufzehrung liefert.

## Patentansprüche

1. Schutzhelm mit einer Außenschicht aus Leder,
der eine stabile Helmschale aufweist,
die aus mehreren, dauerhaft miteinander verbundenen Segmenten (10, 20, 30, 40) aufgebaut ist,
die je eine gewölbte und/oder sonstige erhabene, insbesondere erhabene dekorative Oberflächenkontur aufweisen,
wobei jedes Segment (10, 20, 30, 40) einen die erforderliche Stabilität liefernden Kern (12, 22, 42) aus geschäumtem Kunststoff aufweist, der an seiner Außenseite mit einer Deckschicht (11, 21, 41) aus Leder versehen ist,
dadurch gekennzeichnet, daß
die Lederschicht (11, 21, 41) benachbart zum Kunststoffkern (12, 22, 42) mit einer elastischen, als Sperrschicht dienenden
Kaschierung versehen ist; und
der Kunststoffkern (12, 22, 42) aus einem CO₂-getriebenen Polyurethan-Formschaum besteht, der unter solchen Bedingungen in situ an der in einer mechanisch stabilen Form (100) eingeschlossenen Lederschicht (11, 21, 41) erzeugt und ausgeschäumt worden ist, daß der entstehende Schäumdruck ein Tiefziehen der Lederschicht (11, 21, 41) bewirkt, wobei das Leder formgetreu an die mit der gewünschten Oberflächenkontur versehene Formenoberfläche angepaßt wird.

2. Schutzhelm nach Anspruch 1,
dadurch gekennzeichnet, daß
die Helmschale aus drei Segmenten aufgebaut ist, nämlich einem Mittelteil, das die Stirn, den Schädel und den Hinterkopf eines Benutzers bedeckt, und je einem Seitenteil, das je eine Schläfen- und Wangenpartie des Benutzers bedeckt.

3. Schutzhelm nach Anspruch 1,
dadurch gekennzeichnet, daß
die Helmschale aus vier Segmenten (10, 20, 30, 40) aufgebaut ist, nämlich einem Vorderteil (10), das die Stirn und die vordere Schädelpartie eines Benutzers bedeckt, einem Hinterteil (20), das die hintere Schädelpartie und den Hinterkopf des Benutzers bedeckt, und je einem Seitenteil (30, 40), das je eine Schläfen- und Wangenpartie des Benutzers bedeckt.

4. Schutzhelm nach Anspruch 2 oder 3,
dadurch gekennzeichnet, daß
an dem als Vorderteil dienenden Segment (10) oder an einem vorderen Abschnitt des als Mittelteil dienenden Segmentes eine erhabene dekorative Struktur ausgebildet ist.

5. Schutzhelm nach einem der Ansprüche 1 bis 4,
dadurch gekennzeichnet, daß
zusätzlich ein oder mehrere Dekorteile (50, 52, 54) vorhanden sind, welche den gleichen Aufbau wie die Segmente (10, 20, 30, 40) aufweisen; und
ein solches Dekorteil (50, 52, 54) lösbar und auswechselbar mit einem Segment (10, 20, 30, 40) verbindbar ist.

6. Schutzhelm nach einem der Ansprüche 1 bis 5,
dadurch gekennzeichnet, daß
der Polyurethanschaum ein weicher oder halbharter Formschaum ist, wie er typischerweise zur Hinterschäumung tiefgezogener Folien eingesetzt wird.

7. Schutzhelm nach einem der Ansprüche 1 bis 6,
dadurch gekennzeichnet, daß
in den Kunststoffkern (12, 22, 42) Befestigungsmittel (6) eingebettet sind für die nachfolgende, dauerhafte, nicht lösbare Verbindung der Segmente (10, 20, 30, 40) untereinander.

8. Schutzhelm nach einem der Ansprüche 1 bis 7,
dadurch gekennzeichnet, daß
benachbarte Segmente (10, 20, 30, 40) an ihrem Umfang komplementäre Paßflächen (23, 24, 25; 43, 45) aufweisen, die aus der Oberfläche des Kunststoffkerns (12, 22, 42) gebildet sind;
in diesen Kunststoffkern (12, 22, 42) Aufnahmeteile (61) eingebettet und verankert sind, die einen Aufnahmeschacht (64) begrenzen, der im wesentlichen senkrecht zu der Paßfläche (23, 24, 25 ; 43, 45) ausgerichtet ist und bündig mit dieser abschließt;
an benachbarten Segmenten (10, 20, 30, 40) jeweils paarweise einander zugeordnete und miteinander fluchtende Aufnahmeteile (61) vorgesehen sind;
ferner an die Aufnahmeteile (61) angepaßte und in diese einführbare Steckteile (70) vorhanden sind, wobei jedes Steckteil (70) einen unabhängig handhabbaren länglichen Körper (71) bildet, der zwei gegenüberliegende Endabschnitte (75, 76) aufweist; und
durch Einführen je eines Steckteil-Endabschnittes (75, 76) in den Aufnahmeschacht (64) je eines passenden, mit dem anderen fluchtenden Aufnahmeteils (61) eine dauerhafte und unlösbare Steckverbindung zwischen diesen beiden Segmenten erzeugt wird.

9. Schutzhelm nach Anspruch 8,
dadurch gekennzeichnet, daß
am Aufnahmeschacht (64) (bzw. am Steckteil (70)) Aussparungen (65) ausgebildet sind, und am Steckteil (70) (bzw. am Aufnahmeschacht (64)) passende Vorsprünge (72) angeformt sind, die beim Einführen eines Steckteil-Endabschnittes (75, 76) in den Aufnahmeschacht (64) unter elastischer Verformung in die zugeordnete Aussparung (65) eingreifen und eine dauerhafte, nicht erneut lösbare Verbindung von Steckteil (70) und Aufnahmeteil (61) gewährleisten.

10. Schutzhelm nach Anspruch 8 oder 9,
dadurch gekennzeichnet, daß
am Aufnahmeteil (61) einstückig ein Verankerungsteil (67) angeformt ist, das im Verlauf der Ausschäumung des Kunststoffkerns (12, 22, 42) in den Kunststoffkern (12, 22, 42) eingebettet wird.

11. Schutzhelm nach Anspruch 10,
dadurch gekennzeichnet, daß
ein Aufnahmeteil (61) im wesentlichen nur über sein Verankerungsteil (67) mit dem Kunststoffkern (12, 22, 42) verbunden ist; und am Außenumfang des Aufnahmeschachtes (64) ein freier Spalt (29) oder Zwischenraum bis zum angrenzenden Kunststoffkern ausgebildet ist.

12. Schutzhelm nach Anspruch 5,
dadurch gekennzeichnet, daß
zur lösbaren Befestigung weiterer Komponenten (Dekorteile (50, 52, 54), Polster, Innenausstattung, Kinnriemen-Befestigung) an einem Segment (10, 20, 30, 40) eine oder mehrere Steckverbindungen vorgesehen sind, die in üblicher Weise durch Einführen eines Kugelteiles (86) (Steckteil) in ein Federteil (80) (Aufnahmeteil) erzeugt werden; wobei das Federteil (80) in den jeweiligen Kunststoffkern (12, 22, 42) am Segment (10, 20, 30, 40) oder an der zu befestigenden Komponente (Dekorteil(e) (50, 52, 54), Polster, Innenausstattung) eingebettet ist.

13. Schutzhelm nach Anspruch 12,
dadurch gekennzeichnet, daß
ein Federteil (86) und/oder ein Kugelteil (80) mit einem großflächigen Verankerungsteil (84, 89) verbunden ist, das im Verlauf der Ausschäumung des Kunststoffkerns in den Kunststoffkern (12, 22, 42) eingebettet wird.

14. Schutzhelm nach Anspruch 12,
dadurch gekennzeichnet, daß
das Kugelteil Bestandteil einer herkömmlichen Nietverbindung ist, wobei an der vorgesehenen Stelle für eine Nietverbindung am Segment ein von der Innenseite her offener Abschnitt mit verminderter Segment-Schichtdicke ausgebildet ist;
in diesem Abschnitt der Niet gesetzt wird, wobei das Kugelteil über die Lederoberfläche vorsteht; und
das Federteil (80) in passender Anordnung in den Kunststoffkern der anderen, anzubringenden Komponente (Dekorteil (50, 52, 54), Polster, Innenausstattung) eingebettet ist.

15. Schutzhelm nach einem der Ansprüche 1 bis 14,
dadurch gekennzeichnet, daß
die Stoßfugen zwischen benachbarten Segmenten mit einem Keder (90) überdeckt sind;
dieser Keder aus einem biegsamen Rohr (91) und einstückig angeformten Seitenflügeln (93) aus flexiblem Kunststoff besteht;
diese Seitenflügel (93) mit einem Lederband eingefaßt sind; und
das Lederband (96) längs seiner Randstreifen mit der Lederschicht an der Außenfläche der Segmente vernäht ist.

16. Verfahren zur Herstellung eines Schutzhelmes nach einem der Ansprüche 1 bis 15,
gekennzeichnet durch nachstehende Verfahrensschritte:
a) für jedes Segment (10, 20, 30, 40) wird eine mehrteilige, verschließbare, heizbare und evakuierbare Form (100) bereitgestellt, deren Formhohlraum (127) an die Kontur des Segmentes (10, 20, 30, 40) angepaßt ist;
b) es wird eine Form (100) bereitgestellt, die wenigstens nachstehende Formteile aufweist:
- eine Unterform (110), in deren Boden Bohrungen (114) ausgespart sind, die an ein Unterdrucksystem angeschlossen sind,
- einen Zwischenring (120), dessen Innenkontur (125) an den Umfang der Segmente (10, 20, 30, 40) angepaßt ist;
- eine Oberform (130) mit einem Formstück (132), das in die Innenkontur (125) des Zwischenringes (120) einführbar ist;
c) auf den Boden der Unterform (110) wird das Deckschichtmaterial (21) aufgelegt und mit Hilfe von Unterdruck und gegebenenfalls mechanischer Unterstützung an den Boden der Unterform (110) angesaugt und angepaßt;
d) der Zwischenring (120) wird - bündig mit der Unterform (110) - auf das Deckschichtmaterial (21) aufgesetzt, das einen umlaufenden Randabschnitt (21') aufweist, der zwischen die komplementären Paßflächen von Unterform (110) und Zwischenring (120) eingesetzt ist und dort wie eine Dichtung wirkt;
e) in den vom Zwischenring begrenzten Formhohlraum (127) wird eine kleine dosierte Menge einer unmittelbar vorher erzeugten Mischung aus den Komponenten eines selbsttätig einen CO₂-getriebenen, Polyurethan-Formschaum bildenden Systems eingebracht;
f) die Oberform wird abgesenkt, und die gesamte Form (100) wird verschlossen und verriegelt;
g) die Form (100) wird eine Zeitspanne lang geschlossen gehalten, bis der sich bildende Schaum den gesamten Formhohlraum ausgefüllt und sich formbeständig stabilisiert hat;
h) daraufhin wird die Form (100) geöffnet, die Oberform (130) und der Zwischenring (120) angehoben, das Segment (10, 20, 30, 40) entnommen und soweit für die weitere Verwendung erforderlich, beschnitten, gereinigt und bearbeitet.

17. Verfahren nach Anspruch 16,
dadurch gekennzeichnet, daß
das Formstück (132) und/oder der Zwischenring (120) lösbar mit Befestigungsmitteln (61, 70, 86) bestückt wird, die mit einem Verankerungsteil (67, 84, 89) versehen sind, das im Verlauf der Schaumbildung in den Kunststoffkern (12, 22, 42) eingebettet wird.

18. Verfahren nach Anspruch 17
dadurch gekennzeichnet, daß
am Zwischenring (120) vorstehende Hülsenabschnitte (126) angebracht sind; und
in diese Hülsenabschnitte (126) lösbar die Aufnahmeteile (62) der Befestigungsmittel (61) zur dauerhaften Verbindung der Segmente (10, 20, 03, 40) untereinander eingesetzt werden.

19. Verfahren nach einem der Ansprüche 16 bis 18,
dadurch gekennzeichnet, daß
ein zweiteiliger Zwischenring verwendet wird, der zwei Zwischenring-Hälften (122, 123) aufweist.

20. Verfahren nach einem der Ansprüche 16 bis 19,
dadurch gekennzeichnet, daß
in Stufe (e) die Mischung mit Hilfe eines Handmischkopfes (150) zugeführt wird, in welchem die getrennt zugeführten Komponenten zwangsweise vermischt und nach einem wählbaren Programm dosiert werden.

21. Verfahren nach einem der Ansprüche 16 bis 20,
dadurch gekennzeichnet, daß
ein schaumbildendes System verwendet wird, das einen CO₂-getriebenen, weichen oder halbharten Formschaum aus Polyurethan liefert.

22. Verfahren nach einem der Ansprüche 16 bis 21,
dadurch gekennzeichnet, daß
die Kaschierung mit Hilfe eines elastisch eingestellten Acryllackes erzeugt wird.

## Claims

1. A protective helmet having a leather outer layer
and comprising a stable helmet shell
consisting of several, permanently connected segments (10,20,30,40), each segment (10,20,30,40) comprising a curved and/or otherwise raised, especially decoratively raised surface contour, and having a core (12,22,42) providing the necessary stability and consisting of foamed plastic and having on its outside a cover layer (11,21,41) made of leather,
characterized in that
the leather layer (11,21,41) comprises adjacent to the plastic core a flexible lining serving as a barrier layer; and
the plastic core (12,22,42) is made of a CO₂-driven polyurethane moulded foam generated and foamed in situ and immediately on the leather layer (11,21,41) placed in a rigid mould (100), under those conditions that the thus generated foaming pressure causes a deep-drawing exactly matching the leather to the mould surface comprising the desired surface contour.

2. A protective helmet according to claim 1,
characterized in that
the helmet shell consists of three segments, including a central piece covering forehead, cranium and back of the head of a user, and further including each a side piece covering each a temple and cheek section of the user.

3. A protective helmet according to claim 1,
characterized in that
the helmet shell consists of four segments (10,20,30,40) including a front piece (10) covering forehead and front cranium section of a user, a rear piece (20) covering a rear cranium section and back of the head of the user, and each a side piece (30,40) covering each a temple and cheeck section of the user.

4. A protective helmet according to claim 2 or 3,
characterized in that
a raised and decorative structure is formed at the segment (10) serving as front piece, or at a front section of the segment serving as central piece.

5. A protective helmet according to anyone of the claims 1 to 4,
characterized in that
additionally providing one or several decorating piece(s) (50,52,54) comprising the same structure as the segments (10,20,30,40); and wherein each decorating piece (50,52,54) is adapted for a detachable and replaceable connection with a segment (10,20,30,40).

6. A protective helmet according to anyone of the claims 1 to 5,
characterized in that
the polyurethane foam comprises a soft or half-hard moulded foam such as typically used for back-foaming of deep-drawn foils or films.

7. A protective helmet according to anyone of the claims 1 to 6,
characterized in that
fastening means (6) being inserted into the plastic core (12,22,42) for the subsequent, permanent non-detachable interconnection of the segments (10,20,30,40).

8. A protective helmet according to anyone of the claims 1 to 7,
characterized in that
adjoining segments (10,20,30,40) comprise at their periphery complementary mating surfaces (23,24,25; 43,45) formed by the surface of the plastic core (12,22,42);
female components (61) being embedded and fastened within the plastic core (12,22,42) and defining a shaft (64) arranged essentially vertical to and flush-mounted with the mating surface (23,24,25; 43,45);
further, adjoining segments (10,20,30,40) comprise each paired allocated and aligned female components (61);
further providing male components (70) matched to and insertable into the female components (61), wherein every male component (70) comprises an independent, elongated body (71) having two opposite end sections (75,76); and
obtaining a permanent and non-detachable plug-in connection between two adjoining segments by inserting each a male component end section (75,76) into a shaft (64) of one segment and into the other matching and aligned shaft (64) of the adjoining segment.

9. A protective helmet according to claim 8,
characterized in that
recesses (65) are recessed at the shaft (64) (or at the male component (70), respectively) ; and
matching projections (72) project from the male component (70) (or from the shaft (64), respectively) ; and
when inserting a male component end section (75, 76) into the shaft (64), the projections (72) will engage the recesses (65) under mutual elastic deformation and will cause a permanent, non-detachable connection of male component (70) and female component (61).

10. A protective helmet according to claim 8 or 9,
characterized in that
an anchoring element (67) is formed in a one-piece manner with the female component (61); and
this anchoring element (67) becomes embedded within the plastic core (12,22,42) during the foaming thereof.

11. A protective helmet according to claim 10,
characterized in that
a free gap (29) or clearance is formed between the outer circumference of the shaft (64) and the adjacent plastic core thus connecting the female component with the plastic core (12,22,42) essentially and only via its anchoring element (67).

12. A protective helmet according to claim 5,
characterized in that
additionally providing one or several plug-in connections for a detachable fastening of further components such as decorating pieces (50,52,54), cushions, interior fittings, chin strap fastening means, and the like to a segment (10,20,30,40);
these plug-in connections provide in a usual manner an insertion of a ball piece (86) (male component) into a groove or slot piece (80) (female component) ;
wherein the ball piece (80) being embedded within the plastic core (12,22,42) of a segment (10,20,30,40) or at the components to be fastened, such as decorating piece(s) (50,52,54), cushion, interior fittings and the like.

13. A protective helmet according to claim 12,
characterized in that
the groove or slot piece (86) and/or the ball piece (80) is connected with a large sized anchoring element (84, 89) which becomes embedded within the plastic core (12,22,42) during foaming thereof.

14. A protective helmet according to claim 12,
characterized in that
the ball piece forms a component of a conventional rivet joint,
wherein a segment section having a reduced layer thickness and being open to the helmet interior is formed at the place intended for the rivet joint;
a rivet is placed at this section in such a manner that the ball piece projects beyond the leather surface; and
the groove or slot piece (80) being embedded in a matching arrangement within the plastic core of the other to be fastened component such as decorating pieces (50,52,54) cushions, interior fittings and the like.

15. A protective helmet according to anyone of the claims 1 to 14,
characterized in that
additionally providing a strip (90) covering a gap at the joint between adjoining segments;
this strip (90) comprises a flexible tube (91) having projecting side-wings (93) formed in one-piece manner with the tube (91) and made of a flexible plastic material;
these side-wings being bordered with a leather band; and
the leather band (96) being stitched along its border edges with the leather layer at the outer surface of the segments.

16. A method of manufacturing a protective helmet according to anyone of the claims 1 to 15,
characterized by the following method steps:
a) providing a multipart, lockable, heatable and evacuateable mould (100) for each segment (10,20,30,40) and comprising a mould cavity (127) matched to the contour of the segment (10,20,30,40);
b) providing a mould (100) comprising at least the following mould components:
- a bottom half mould (110) comprising a base having a number of boreholes (114) connected with a source of low pressure;
- an intermediate ring (120) having an internal contour (125) matched to the circumference of the segment (10,20,30,40);
- a top half mould (130) comprising a mould piece (132) insertable into the internal contour (125) of the intermediate ring (120);
c) placing the cover layer material (21) on the base of the bottom half mould (110) and matching the cover layer material (21) by means of suction pressure and - if necessary - by additional mechanical assistance to the base of the bottom half mould (110);
d) placing the intermediate ring (120) - aligned with the bottom half mould (110) - on the cover layer material (21) having a circumferential edge section (21') arranged between complementary mating surfaces of the bottom half mould (110) and the intermediate ring (120), respectively, and serving there as a sealing gasket;
e) introducing a small, dosed amount of a just previously produced mixture of the components of automatically generating a CO₂-driven polyurethane moulded foam into the cavity (127) defined by the intermediate ring (120);
f) lowering the top half mould (130) and closing and locking the complete mould (100);
g) maintaining the mould (100) closed for a specific time period until the just forming foam has filled the complete mould cavity and has acquired dimensional stability;
h) thereafter, opening the mould (100), raising the top half mould (130) and the intermediate ring (120),
and removing the segment (10,20,30,40) and cutting, cleaning and processing the segment (10,20,30,40) as far as necessary for the further use.

17. A method according to claim 16,
characterized in that
fastening means (61,70,86) comprising an anchoring element (67, 84,89) which becomes embedded within the plastic core (12,22,42) during the foaming thereof, are detachably connected with the mould piece (132) and/or with the intermediate ring (120).

18. A method according to claim 17,
characterized in that
attaching projecting sleeve sections (126) to the intermediate ring (120); and
detachably inserting the female components (62) of the fastening means (61) for a permanent interconnection of the segments (10, 20,30,40) into these sleeve sections (126).

19. A method according to anyone of the claims 16 to 18,
characterized in that
providing a split intermediate ring comprising two halves (122,123) of an intermediate ring.

20. A method according to anyone of the claims 16 to 19,
characterized in that
introducing in step (e) the mixture by means of a manual control mixing head (150) wherein the separately fed components become compulsory mixed and are dosed according to a selectable program.

21. A method according to anyone of the claims 16 to 20,
characterized in that
using a foam forming system providing a CO₂-driven soft or half-hard polyurethane moulded foam.

22. A method according to anyone of the claims 16 to 21,
characterized in that
generating the lining by means of a flexibly adjusted acryl paint.

## Revendications

1. Casque de protection avec une couche extérieure en cuir, qui présente une coque stable formant casque,
qui se compose de plusieurs segments (10, 20, 30, 40) reliés durablement entre eux,
qui présentent chacun un contour de surface au relief particulièrement décoratif, arqué ou autre relief,
chaque segment (10, 20, 30, 40) présentant un noyau (12, 22, 42) fournissant la stabilité nécessaire en mousse synthétique, noyau qui est muni sur sa face extérieure d'une couche couvrante en cuir (11, 21, 41),
caractérisé en ce que
la couche de cuir (11, 21, 41) est munie à côté du noyau en plastique (12, 22, 42) d'un contreplacage élastique servant de couche barrière ;
et le noyau synthétique (12, 22, 42) se compose d'une mousse moulée de polyuréthane activé au CO₂, qui est générée in situ dans la couche de cuir (1, 21, 41) enrobée dans un moule mécaniquement stable (100) et qui a été moussée et, ce, dans de telles conditions que la pression de mousse en résultant provoque un emboutissage profond de la couche de cuir (11, 21, 41), le cuir étant adapté à l'identique à la forme de la surface du moule muni du contour de surface recherché.

2. Casque de protection selon la revendication 1,
caractérisé en ce que
la coque de casque est constituée de 3 segments, notamment une partie médiane qui recouvre le front, le crâne et la partie arrière de la tête, et une partie latérale respective qui recouvre la tempe et la joue de l'utilisateur.

3. Casque de protection selon la revendication 1,
caractérisé en ce que
la coque de casque est constituée de quatre segments (10, 20, 30, 40), notamment une partie avant (10), qui recouvre le front et la partie crânienne avant d'un utilisateur, une partie arrière (20) qui recouvre la partie crânienne arrière et la nuque de l'utilisateur, et une partie latérale respective (30, 40) qui recouvre les tempes et les joues de l'utilisateur.

4. Casque de protection selon la revendication 2 ou 3,
caractérisé en ce qu'une structure au relief décoratif est constituée sur le segment (10) servant de partie avant ou sur une section avant du segment servant de partie médiane.

5. Casque de protection selon l'une des revendications 1 à 4,
caractérisé en ce qu'en supplément une ou plusieurs parties décoratives (50, 52, 54) sont prévues, qui présentent la même construction que les segments (10, 20, 30, 40) et une telle partie décorative (50, 52, 54) est amovible et interchangeable pour être reliée à un segment (10, 20, 30, 30).

6. Casque de protection selon l'une des revendications 1 à 5,
caractérisé en ce que la mousse de polyuréthane est une mousse moulée molle ou semi-dure qui est utilisée de manière typique pour le garnissage de feuilles embouties profond.

7. Casque de protection selon l'une des revendications 1 à 6, caractérisé en ce que dans le noyau synthétique (12, 22, 42), sont enrobés des moyens de fixation (6) pour la fixation consécutive, durable et inamovible des segments (10, 20, 30, 40) entre eux.

8. Casque de protection selon l'une des revendications 1 à 7,
caractérisé en ce que
des segments voisins (10, 20, 30, 40) présentent sur leur périphérie des surfaces d'ajustement complémentaires (23, 24, 25 ; 43, 45) qui sont ménagées à la surface du noyau synthétique (12, 22, 42) ;
en ce que dans ce noyau synthétique (12, 22, 42) sont enrobées et ancrées des pièces de logement (61) qui limitent une ouverture de logement (64) qui est sensiblement orientée perpendiculairement à la surface d'ajustement (23, 24, 25 ; 43, 45) et est jointive à cette dernière ;
en ce que sur des segments voisins (10, 20, 30, 40), il est respectivement prévu des pièces de logement (61) alignées entre elles et associées par paire ;
en ce qu'en outre, il est prévu des pièces d'emboîtement (70) adaptées aux pièces de logement (61) et introduisibles dans ces dernières, chaque partie emboîtable (70) formant un corps allongé (71) indépendant qui présente deux sections d'extrémité opposées (75, 76) ; et en ce que par l'introduction d'une section d'extrémité de partie emboîtable (75, 76) dans l'ouverture (64) de chaque partie de logement (61) en ajustement et alignement mutuel, il est réalisé une liaison par encliquetage durable et inamovible entre ces deux segments.

9. Casque de protection selon la revendication 8,
caractérisé en ce que
sur l'ouverture de logement (64) (respectivement sur la partie encliquetable (70)) sont ménagés des évidements (65) et sur la partie encliquetable (70) (respectivement sur l'ouverture de logement (64)) sont moulées des saillies correspondantes (72), qui à l'insertion d'une section d'extrémité de partie encliquetable (75, 76) dans l'ouverture de logement (64) s'engagent sous déformation élastique dans l'évidement associé (65) et garantissent une liaison durable inamovible de la partie encliquetable (70) et de la partie de logement (61).

10. Casque de protection selon la revendication 8 ou 9,
caractérisé en ce que
sur la partie de logement (61) une partie d'ancrage (67) est moulée d'une seule pièce et qui est enrobée dans le noyau synthétique (12, 22, 42) au cours de la formation de mousse du noyau synthétique (12, 22, 42).

11. Casque de protection selon la revendication 10,
caractérisé en ce qu'
une partie de logement (61) est reliée sensiblement seulement par sa partie d'ancrage (67) au noyau synthétique (12, 22, 42) ; et en ce que sur la périphérie externe de l'ouverture de logement (64), est constituée une fente libre (29) ou un espace allant jusqu'au noyau synthétique attenant.

12. Casque de protection selon la revendication 5,
caractérisé en ce que
pour la fixation amovible d'autres composants (parties décoratives (50, 52, 54), rembourrage, garniture, sangle de menton), sur un segment (10, 20, 30, 40), il est prévu une ou plusieurs liaisons encliquetables qui habituellement peuvent être réalisées par insertion d'une partie sphérique (86) (partie encliquetable) dans une partie formant ressort (80) (partie de logement) ; la partie formant ressort (80) étant enrobée dans le noyau synthétique respectif (12, 22, 42) sur le segment (10, 20, 30, 40) ou sur le composant à fixer (partie(s) décorative(s) (50, 52, 54), rembourrage, garniture).

13. Casque de protection selon la revendication 12,
caractérisé en ce qu'
une partie formant ressort (86) et/ou une partie sphérique (80) est reliée par une partie d'ancrage de grande surface (84, 89) qui est enrobée dans le noyau synthétique (12, 22, 42) au cours de la formation de mousse du noyau synthétique.

14. Casque de protection selon la revendication 12,
caractérisé en ce que
la partie sphérique fait partie d'un assemblage rivé traditionnel, une section ouverte de la face interne avec une épaisseur de couche de segment décroissante étant formée sur le segment à l'emplacement prévu pour l'assemblage rivé;
en ce que la rivure est placée dans cette section, la partie sphérique faisant saille au-dessus de la surface en cuir ; et
en ce que la partie formant ressort (80) est enrobée de manière appropriée dans le noyau synthétique de l'autre composant à placer (partie décorative (50, 52, 54), rembourrage, garniture).

15. Casque de protection selon l'une des revendications 1 à 14,
caractérisé en ce que
les joints entre les segments voisins sont recouverts d'un bourrelet (90) ;
en ce que ce bourrelet se compose d'un tube flexible (91) et d'ailettes latérales (93) moulées d'une seule pièce en matière plastique flexible ;
en ce que ces ailettes latérales (23) sont cerclées d'une bande de cuir ; et que la bande de cuir (96) est cousue le long de sa bordure à la couche de cuir sur la face externe des segments.

16. Procédé de fabrication d'un casque de protection selon l'une des revendications 1 à 15,
caractérisé par les étapes suivantes de procédé :
a) pour chaque segment (10, 20, 30, 40), on prépare un moule (100) en plusieurs parties pouvant être fermé, chauffé et mis sous vide, dont la cavité (127) est adaptée au contour du segment (10, 20, 30, 40) ;
b) il est préparé un moule (100) qui présente au moins les parties de moule suivantes :
- un moule inférieur (110) dans le fond duquel sont ménagés des alésages (114) qui sont raccordés à un système de dépression ;
- une bague intermédiaire (120), dont le contour interne (125) est adapté à la périphérie des segments (10, 20, 30, 40) ;
- un moule supérieur (130) avec une pièce de moule (132) qui est insérable dans le contour interne (125) de la bague intermédiaire (120),
c) le matériau de couche de couverture (21) est appliqué sur le fond du moule inférieur (110) et à l'aide de la dépression et éventuellement d'un moyen mécanique est aspiré et adapté au fond du moule inférieur (110).
d) la bague intermédiaire (120) est placée dans l'alignement du moule inférieur (110) sur le matériau de couche de recouvrement (21) qui présente une section circulaire de bordure (21') qui est placée entre les surfaces complémentaires d'ajustement du moule inférieur (110) et de la bague intermédiaire (120) pour y faire office de garniture d'étanchéité ;
e) dans la cavité de moule (127) délimitée par la bague intermédiaire est introduite une petite quantité dosée d'un mélange préparé juste avant à partir des composants d'un système formant une mousse moulée de polyuréthane activée par Co₂ ;
f) le moule supérieur est abaissé et tout le moule (100) est fermé et verrouillé ;
g) le moule (100) est maintenu fermé un certain temps jusqu'à ce que la mousse en formation remplisse toute la cavité de moule et se stabilise dimensionnellement ;
h) puis le moule (100) est ouvert, le moule supérieur (130) et la bague intermédiaire (120) est soulevée, le segment (10, 20, 30, 40) est retiré pour être découpé, nettoyé et travaillé dans la mesure où cela est nécessaire pour l'utilisation ultérieure.

17. Procédé selon la revendication 16,
caractérisé en ce que
la pièce de moule (132) et/ou la bague intermédiaire (120) est garnie de manière amovible par des moyens de fixation (61, 70, 86) qui sont munis d'une partie d'ancrage (67, 84, 89) qui est enrobée dans le noyau synthétique (12, 22, 42) au cours de la formation de la mousse.

18. Procédé selon la revendication 17,
caractérisé en ce que
la bague intermédiaire (120) comporte des sections de douilles saillantes (126) ; et
ses sections de douille (126) accueillent de manière amovible les pièces de logement (62) des moyens de fixation (61) pour une liaison durable des segments (10, 20, 30, 40) entre eux.

19. Procédé selon l'une des revendications 16 à 18,
caractérisé en ce qu'
une bague intermédiaire en deux parties est utilisée et qui présente deux moitiés de bague intermédiaire (122, 123).

20. Procédé selon l'une des revendications 16 à 19,
caractérisé en ce que
dans la phase (e), le mélange est ajouté à l'aide d'une tête de mélange manuel (150) dans laquelle les composants amenés séparément sont mélangés d'office et dosés suivant un programme sélectionnable.

21. Procédé selon l'une des revendications 16 à 20,
caractérisé en ce qu'un
système de formation de mousse est utilisé fournissant une mousse moulé en polyuréthane molle ou semi-dure activée par CO₂.

22. Procédé selon l'une des revendications 16 à 21,
caractérisé en ce que
le contreplacage s'effectue à l'aide d'un vernis acrylique élastique.
